(19) Europäisches Patentamt
European Patent Office
Office européen des brevets

(11) **EP 3 227 705 B1**

(12) **FASCICULE DE BREVET EUROPEEN**

(45) Date de publication et mention de la délivrance du brevet:
**24.11.2021 Bulletin 2021/47**

(21) Numéro de dépôt: **15810697.1**

(22) Date de dépôt: **04.12.2015**

(51) Int Cl.:
*G01S 5/00* (2006.01)     *G01S 5/02* (2010.01)

(86) Numéro de dépôt international:
**PCT/FR2015/053320**

(87) Numéro de publication internationale:
**WO 2016/087794 (09.06.2016 Gazette 2016/23)**

(54) **DISPOSITIF ÉLECTRONIQUE POUR LA LOCALISATION PROCHE D'UN OBJET TERRESTRE, ET PROCÉDÉ DE LOCALISATION D'UN TEL OBJET**

ELEKTRONISCHE VORRICHTUNG ZUR NÄHENORTUNG EINES TERRESTRISCHEN OBJEKTS UND VERFAHREN ZUM ORTEN SOLCH EINES OBJEKTS

ELECTRONIC DEVICE FOR THE NEAR LOCATING OF A TERRESTRIAL OBJECT, AND METHOD OF LOCATING SUCH AN OBJECT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.12.2014 FR 1461930**
**12.02.2015 FR 1551137**

(43) Date de publication de la demande:
**11.10.2017 Bulletin 2017/41**

(73) Titulaire: **Roquel, Arnaud**
**69300 Caluire et Cuire (FR)**

(72) Inventeur: **Roquel, Arnaud**
**69300 Caluire et Cuire (FR)**

(74) Mandataire: **Demulsant, Xavier**
**Dejade & Biset**
**35, rue de Châteaudun**
**75009 Paris (FR)**

(56) Documents cités:
**WO-A1-2013/101174     US-A1- 2013 130 712**

- **GUO XIAOLIN ET AL: "An inter-device positioning method based on inertial sensors and wireless signal strength", 2013 3RD INTERNATIONAL CONFERENCE ON CONSUMER ELECTRONICS, COMMUNICATIONS AND NETWORKS, IEEE, 20 novembre 2013 (2013-11-20), pages 121-124, XP032542589, DOI: 10.1109/CECNET.2013.6703287 ISBN: 978-1-4799-2859-0 [extrait le 2014-01-03]**

## Description

### Domaine technique de l'invention

L'invention concerne le domaine des dispositifs électroniques sans fil permettant de localiser un objet terrestre dans un rayon proche, et plus particulièrement un objet en mouvement permanent ou intermittent qui est porteur d'un dispositif spécifique. L'invention concerne plus précisément un dispositif et procédé permettant de localiser le porteur d'un dispositif électronique spécifique, dans un espace ouvert ou fermé (tel que : extérieur, centre commercial, stade, centre de loisirs) à partir d'un deuxième dispositif connecté au premier par une liaison de données. L'invention concerne également les procédés permettant la détermination des coordonnées exactes du porteur en mouvement dans un plan cartésien centré sur le deuxième dispositif qui peut être également lui-même être en mouvement.

### Etat de la technique

On connaît les technologies permettant la localisation tels que les systèmes satellitaires (GPS, GLONASS), les réseaux terrestres de communication type GSM, les réseaux locaux (Bluetooth, Wifi, Zigbee, ULB, Infra-Rouge, etc.) ou encore les centrales inertielles.

On connaît également des techniques de localisation d'un dispositif utilisant des méthodes basées sur des mesures temporelles (connues de l'homme du métier sous les appellations Time Of Flight (TOF) / Time Of Arrival (TOA), Time Différence Of Arrival (TDOA)), sur une mesure angulaire de l'arrivée de l'onde (Angle Of Arrival (AOA)), sur l'analyse de la puissance du signal reçu d'une antenne par mesure RSSI (RSSI = Received Signal Strength Indicator), le déphasage d'onde ou encore l'indentification de zone connue.

On connaît également le matériel nécessaire aux méthodes citées comme l'utilisation d'amers. Un amer est un matériel de référence connu en position permettant d'échanger un ensemble d'informations avec le dispositif distant. Le nombre de ces amers dépend de la technique de localisation employée ainsi que du contexte d'utilisation.

On connaît la localisation par triangulation, laquelle exploite les informations de trois amers dont l'indépendance cognitive est supposée. La triangulation utilise uniquement les mesures d'angles (A0A) entre les amers et les signaux reçus.

On connaît également la localisation par trilatération, qui nécessite, à l'instar de la triangulation, trois sources d'informations dont l'indépendance cognitive est respectée, mais qui utilise uniquement des mesures de distance. Cette mesure de distance peut être mise en oeuvre de différentes manières comme par des méthodes d'emprunte radio, d'identification de zones connues ou encore les méthodes connues sous le nom de « fingerprinting » La mise en oeuvre de ces méthodes exige à un apprentissage pouvant rendre leur exploitation contraignante. L'estimation par les techniques de temps de vol mentionnés ci-dessus (TOA/TOF, TDOA) utilisent la vélocité du signal ainsi que le temps de parcours entre l'émission et la réception du signal. Cette solution est soumise au contexte d'utilisation et doit prendre en compte le type de signal ainsi que le milieu de propagation du signal; une mise en oeuvre est décrite dans le document WO 2006/072697 (France Telecom). Certaines technologies sont plus adaptées à ces méthodes que d'autres. Par exemple, l'ULB (IEEE 802.15.4a) basée sur l'interprétation des mesures type TDOA dans les milieux intérieurs offre une précision suffisante mais exige la mise en place d'une infrastructure conséquente.

On connaît également les infrastructures nécessaires à chaque méthode, les limites de chacune, en fonction de l'environnement d'étude ainsi que les contraintes liées aux besoins de l'utilisation de la solution.

Plus spécifiquement, il existe des solutions mettant en oeuvre différentes technologies qui permettent la localisation d'un objet. Certaines solutions utilisent un accéléromètre dont l'information est transmise par un module de transmission radiofréquence (RF). Récemment, la technologie connue sous le nom « Bluetooth » a été utilisée pour permettre la communication entre un dispositif « parent » et un dispositif « enfant ».

Le document GUO XIAOLIN et al.: "An inter-device positioning method based on inertial sensors and wireless signal strength", décrit la détermination de la position relative entre deux appareils mobiles au moyen d'une combinaison de mesures inertielles et RSSI.

Le document GB 2 349 301 décrit le concept d'un système sans fil permettant la surveillance d'enfant, équipé d'un émetteur qui peut être placé dans un bracelet, à partir d'un récepteur porté par un adulte chargé de la surveillance.

Le brevet US 6,246,376 (Texas Instruments) décrit un système de communication par Bluetooth entre deux appareils, permettant de détecter la position d'un des appareils par rapport à l'autre, y compris en l'absence de GPS. Le procédé utilise un capteur type magnétomètre comme une boussole électronique.

Le brevet US 6,788,199 décrit un système de localisation de personnes, comprenant un émetteur-récepteur attaché à la personne à localiser et un dispositif de localisation portable. Ce dernier transmet un signal de localisation contenant un code d'adresse à l'émetteur-récepteur, qui transmet un signal en retour si le code est correct. Le dispositif de localisation utilise ce signal pour déterminer la distance et/ou la direction de l'émetteur-récepteur par rapport au dispositif de localisation.

Le brevet US 6,529,131 décrit un système de communication par Bluetooth entre deux appareils (un appareil « maître » et un appareil « subordonné »), permettant de détecter la position d'un des appareils par rapport à l'autre, en particulier pour surveiller un enfant, en utilisant les données d'un GPS. Le procédé utilise un capteur type magnétomètre comme une boussole électronique.

Le système décrit dans le document US 2004/0021569 utilise des données de gyroscope et d'accéléromètre pour calculer la localisation d'une personne, qui sont transmises à une station de commande maîtresse, par l'intermédiaire d'un système de communication sans fil. Ce système fonctionne dans une structure fermée où les signaux GPS ne sont pas disponibles.

Le document GB 2 391 991 décrit un système sans fil de surveillance d'enfants, comprenant un dispositif porté par le parent, et un dispositif porté par l'enfant, les deux dispositifs communiquant entre eux par ondes radio. Le dispositif enfant est équipé d'une boussole électronique qui indique à l'enfant dans quelle direction se trouve le dispositif parent.

Le brevet US 6,778,902 décrit un système de surveillance et de localisation de personnes qui ne dépend pas d'un système de géolocalisation par satellite, mais qui est basé sur un procédé complexe de synchronisation d'un signal émis par l'unité de surveillance vers l'unité surveillée.

Le brevet US 7,110,777 décrit un système de suivi du mouvement d'un objet comprenant un accéléromètre, un émetteur-récepteur de localisation externe, un élément de traitement, et un émetteur-récepteur radio (RF). Le système comprend également un moniteur mobil qui comprend un élément de traitement et un émetteur-récepteur RF. Ce système est utilisable dans des zones où les signaux GPS ne sont pas disponibles.

Le brevet US 7,667,646 (Nokia) décrit un système pour la détermination de la direction par rapport à une cible à partir de la position d'un dispositif de communication sans fil.

Le document US2008085678 décrit un système de contrôle mobile pour le suivi de personnes, le système comprenant: une ou plusieurs unités d'émission ayant une alimentation électrique, un circuit RF, et une capacité d'émission RF à l'intérieur d'une enceinte portable, une unité de réception mobile comportant une alimentation électrique, un circuit de réception RF, et une interface utilisateur, dans lequel lesdites unités de transmission transmettent des signaux RF à ladite unité de réception de sorte que la position de chaque unité d'émission peut être identifié par rapport à ladite unité de réception portable. La transmission RF peut être une transmission par Bluetooth. Plusieurs autres documents décrivent l'utilisation de la technologie Bluetooth pour permettre la communication entre un dispositif superviseur et un dispositif surveillé, mais sans faire appel à des informations provenant d'une boussole, d'un gyroscope ou d'un accéléromètre pour déterminer la direction de déplacement : il s'agit des documents EP 1 699 183 (Broadcom), DE 102005057578, WO 2010/026566, EP 2 509 343 (Nokia), DE 202013000840.

Le document US 5 289 163 (Perez) décrit un système de localisation pour détecter si l'enfant sort d'un périmètre prédéterminé, et pour déterminer la distance et la direction dans laquelle il se trouve. La détermination de la direction est basée sur un réseau d'antennes. Le document US 6 344 797 décrit également l'utilisation d'antennes pour la localisation.

D'autres systèmes similaires basés sur l'échange de signaux radiofréquence sont décrits dans US 5 900 817, US 6 078 260 (Sony) et US 2003 0034894.

Par ailleurs, on sait que les protocoles de localisation d'un émetteur par une mesure de puissance reçu du signal d'une antenne ne permettent pas, en l'état, une localisation suffisamment précise pour estimer la distance dans les réseaux de capteurs (voir la publication « *De la pertinence du RSSI pour la localisation dans les réseaux de capteurs* » par Karel Heurtefeux et Fabrice Valois, paru dans AlgoTel, May 2012, La Grande Motte, France, <hal-00690748>).

Un problème non résolu est la localisation précise (à une distance typique de 100 mètres), dans un plan cartésien, d'un objet en mouvement muni d'un dispositif spécifique à partir d'un dispositif grand public (type Smartphone), lui-même possiblement en mouvement; cette localisation se faisant de manière indépendante des réseaux externes auxquels sont connectés ces deux dispositifs (Borne Wifi, GPS, GSM, etc.).

Le problème que la présente invention vise à résoudre est de fournir un dispositif et procédé permettant la localisation proche d'un objet en mouvement permanent ou intermittent, cette localisation proche s'étendant sur un rayon ne dépassant pas quelques centaines de mètres et impliquant la détermination des coordonnées exactes dans un plan cartésien, d'un premier objet, qui peut se trouver dans un espace ouvert (i.e. à l'extérieur) ou fermé (i.e. dans un bâtiment) à partir d'un deuxième objet, repère du dit plan cartésien.

Plus particulièrement, les objets ou sujets en mouvement permanent ou intermittent peuvent être un enfant ou un animal domestique ou tout autres objets animés ou inanimé.

**Objets de l'invention**

L'invention a pour but de déterminer la position d'un dispositif fixe ou mobile par rapport à un deuxième dispositif qui peut être fixe ou mobile. Plus précisément, un objet de l'invention porte sur un dispositif comprenant un procédé de détermination de coordonnées absolues dans un plan cartésien d'un objet distant à partir d'une centrale inertielle et d'un module de communication.

L'invention implique l'utilisation de deux dispositifs électroniques différents :

- un dispositif dit « distant » pouvant être « mobile », et qui est appelé ici « dispositif E » (« E » comme « enfant »), qui est fixé sur l'objet dont on souhaite déterminer la position par rapport à un deuxième élément de référence,
- un dispositif dit « référence », et qui est appelé ici « dispositif P » (« P » comme « parent »), qui est porté par la personne qui souhaite déterminer et surveiller la position du dispositif E par rapport à lui-même.

L'invention porte sur un procédé de détermination de coordonnées absolue dans un repère cartésien d'un objet à partir d'une centrale inertielle et d'un module de communication.

Le dispositif E est un dispositif spécifique, qui peut se présenter sous la forme d'un petit boitier, qui peut être incorporé dans un bracelet, dans un collier, dans un porte-clés ou dans un autre objet porté par le sujet à surveiller. Le dispositif E comporte des composants électroniques standards, et un microprocesseur spécifiquement configuré. Plus particulièrement le dispositif E comprend en particulier une centrale inertielle incluant un accéléromètre, un gyromètre et magnétomètre, ainsi que d'un module de communication sans fil.

Ledit module de communication sans fil peut utiliser la technologie BLE (Bluetooth Low Energy) qui est retenue car elle est disponible sur différents matériels grand public et consomme peu d'énergie. D'autres ondes radioélectriques UHF (Ultra High Frequencies) peuvent être utilisées, tel que le GSM (qui nécessite un fournisseur d'accès), le Wifi (qui consomme davantage d'énergie) ou encore la technologie NFC.

Dans un mode de réalisation avantageux, le dispositif P est un dispositif de type « Smartphone » doté d'une application (i.e. d'un logiciel) spécifique.

Dans un autre mode de réalisation, qui peut être combiné avec tous les précédents, un dispositif P surveille plusieurs dispositifs E.

L'affichage de la position sur le dispositif P comprend avantageusement une flèche qui indique la direction et une indication de la distance ; cet affichage peut être intégré dans une application de Smartphone.

L'invention porte également sur l'utilisation du dispositif et procédé selon l'invention pour localiser une personne porteur dudit dispositif. Plus précisément, cette localisation est possible, à l'intérieur d'un périmètre de fonctionnement, à l'extérieur (champ, forêt, espace ouvert, stade, parc de loisirs etc.) comme à l'intérieur (centre commercial, bâtiment, sous-sol), et la personne porteuse dudit dispositif peut être un enfant, un adulte, une personne âgée, une personne exerçant un métier à risque, notamment un pompier, ou tout autre objet animé ou inanimé.

Ledit périmètre de fonctionnement est typiquement compris entre 5 m et 200 m suivant le mode de communication.

Ainsi un premier objet de l'invention est un procédé de localisation dans un plan cartésien d'au moins un dispositif E par rapport à un dispositif P, sachant qu'au moins un des dispositifs E ou P est doté d'une centrale inertielle, et sachant que chacun des dispositifs E et P est doté d'un module de communication de type émetteur - récepteur, ledit procédé comprenant les étapes suivantes :

(i) On initialise les dispositifs E et P par leur synchronisation en angle par rapport au nord magnétique terrestre ;

(ii) En un instant $t_n$, le dispositif E reçoit du dispositif P, ou le dispositif P reçoit du dispositif E une mesure RSSI, et on détermine l'ensemble des positions possibles du dispositif E par rapport à P dans l'espace métrique de la mesure RSSI ;

(iii) A l'instant $t_{n+1}$ le dispositif P reçoit du dispositif E, ou le dispositif E reçoit du dispositif P, au moins une information sur le déplacement du dispositif E et/ou du dispositif P, à savoir au moins la direction ainsi que la distance parcourue pour l'intervalle $[t_n t_{n+1}]$ ;

(iv) On transforme ledit déplacement dans l'espace métrique de la mesure RSSI (appelé « domaine RSSI ») et détermine un ensemble de positions dans le l'espace métrique de la mesure RSSI du dispositif E par rapport au dispositif P par projection du déplacement du dispositif E ou du dispositif P sur les positions estimées à l'étape (ii) ;

(v) On reçoit une nouvelle mesure RSSI à l'instant $t_{n+1}$ et on détermine un ensemble de positions de E par rapport à P à l'instant $t_{n+1}$ ;

(vi) On détermine la relation entre les positions estimées à l'étape (iv) et la ou les positions déterminées du dispositif E à l'instant $t_{n+1}$ issues de l'étape (v) ;

(vii) On détermine si la ou les nouvelles positions calculées à l'étape (v) sont plausibles, possibles ou vraisemblables par rapport aux positions déterminées aux instants précédents (en utilisant la relation déterminée à l'étape (vi)), puis on détermine la position du dispositif E par rapport au dispositif P,

sachant que

- l'étape (i) est nécessaire dans le cas où le dispositif E est muni d'une centrale inertielle et se déplace pendant l'exécution du procédé, et est facultative si le dispositif E ne se déplace pas pendant l'exécution du procédé, et

- le dispositif P doit être muni d'une centrale inertielle pour que son éventuel déplacement puisse être pris en compte pendant l'exécution du procédé.

D'une manière plus générale : si P est mobile et E stationnaire, P a besoin d'une centrale inertielle, mais pas E. Si E est mobile et P stationnaire, E a besoin d'une station inertielle, mais pas P. Si P et E sont mobiles, les deux ont besoin chacun d'une centrale inertielle chacun. Le besoin de synchronisation (étape (i)) se présente si les deux dispositifs se déplacent l'un par rapport à l'autre.

Selon l'invention on affiche sur un écran d'affichage du dispositif P la position du dispositif E par rapport au dispositif P, de préférence par un affichage de la direction et de la distance.

Dans un mode de réalisation, à l'étape (vii), on compare les coordonnées polaires de E par rapport à P entre $t_{n+1}$ et $t_n$ et/ou $t_{n-m}$ (avec $m \geq 1$) et on détermine quelle est position la plus probable à $t_{n+1}$, de préférence en corrélant ces différences angulaires à la distance calculée entre E et P à l'instant $t_n$.

L'initialisation à l'instant $t_n$ est avantageusement effectuée par un utilisateur du dispositif P, à la première mise en oeuvre du cycle de mesure, ou est déclenchée de manière automatique par un évènement déclencheur, ledit évènement déclencheur étant avantageusement la détection d'un mouvement du dispositif P ou du dispositif E par leurs centrales inertielles respectives.

Selon un mode de réalisation la mesure RSSI aux étapes (ii) et (v) est effectuée par le dispositif E ou par le dispositif P.

Ledit module de communication peut être un module de type Bluetooth.

Le procédé selon l'invention peut être exécuté avec une pluralité de dispositifs E, dont chacun émet son propre identifiant et/ou sur une fréquence différente et/ou avec un module de communication différent et/ou avec un standard de communication différent.

Un autre objet de l'invention est un dispositif selon la revendication 9 comprenant un accéléromètre et soit un magnétomètre soit un gyromètre, ainsi qu'un émetteur - récepteur et un microprocesseur.

Un autre objet de l'invention est un dispositif selon la revendication 10 comprenant une centrale inertielle, un émetteur - récepteur et un microprocesseur.

Encore un autre objet de l'invention est l'utilisation du procédé selon l'invention ou du dispositif selon l'invention pour localiser un porteur du dispositif E par rapport au dispositif P, ledit porteur étant sélectionné dans le groupe formé par : un enfant ; un adulte ; une personne sous surveillance dans un établissement de soins, d'éducation spécialisé ou de retraite ; un animal domestique ; un intervenant d'un service de secours ; une victime d'avalanche ou de chute dans une crevasse.

**Description des figures**

Les figures 1 à 12 illustrent des modes de réalisation de l'invention.

Les figures 1a, 1b et 1c représentent chacune un mode de réalisation du système selon l'invention formé par les dispositifs E et dispositif P et du procédé selon l'invention, qui peut être réparti de manières différentes sur les deux dispositifs.

La figure 2a représente la mesure issue du module BLE, la figure 2b représente les mesures issues de la centrale inertielle par rapport à son référentiel.

La figure 3 représente une illustration simplifiée de l'évolution de l'information RSSI fournie par le BLE.

La figure 4 représente le procédé de détermination de coordonnées absolues dans un plan cartésien d'un objet en mouvement à partir d'une centrale inertielle et d'un module de communication.

La figure 5 représente une application de la formule de Friis qui illustre la valeur théorique de RSSI en fonction de la distance entre émetteur et récepteur et pour deux valeurs du coefficient n.

La figure 6 montre l'erreur de RSSI commise si on effectue le calcul avec n=3 au lieu de n=2.

La figure 7 montre le ΔRSSI pour un déplacement de 1 mètre en fonction de la valeur absolu du RSSI.

La figure 8 montre l'erreur sur les ΔRSSI en fonction de la valeur absolue de RSSI.

La figure 9 montre l'erreur sur les ΔRSSI en fonction du déplacement Δd en mètre.

La figure 10 illustre la projection d'un déplacement de coordonnée (Δd, angle) dans le référentiel cartésien transformé en un déplacement de coordonnée (ΔRSSI, angle) dans le domaine RSSI.

La figure 11 illustre une méthode pour déterminer la distance entre les dispositifs E et P. Situation ou P se dirige vers E ou E se dirige vers P.

La figure 12 illustre la mesure du RSSI faite par le dispositif P qui détecte le signal émis par le dispositif E (flèches pointillées), et le flux d'information (flèche noire) sur le déplacement du dispositif E transmis par le dispositif E au dispositif P, ces information provenant des trois capteurs (A,M,G) de la centrale inertielle du dispositif E.

# EP 3 227 705 B1

**Description**

## 1. Définitions

On entend ici par « dispositif E » le matériel (dispositif) détenu par l'objet ou par le sujet (ex. par la personne) dont on souhaite déterminer la position : la lettre E signifie ici « enfant ». Le dispositif E incorpore un ensemble de capteurs nécessaires à sa localisation ainsi qu'un émetteur/récepteur.

On entend ici par « dispositif P » le matériel détenu par le superviseur (la lettre P signifie ici « parent ») permettant de d'estimer la position du dispositif E par rapport à lui même. Le dispositif P incorpore un ensemble de capteurs nécessaires à la localisation de E ainsi qu'un émetteur/récepteur.

On entend ici par « accéléromètre » un capteur mesurant l'accélération linéaire. À l'état statique on percevra uniquement l'accélération gravitationnelle. En ce qui concerne le terme « l'accélération linéaire au mouvement », on note que l'accéléromètre fournit l'accélération longitudinale d'un corps en potentiel mouvement. L'accélération linéaire au mouvement est obtenue en supprimant la gravité perçue par l'accéléromètre : cela revient à prendre en compte uniquement l'accélération propre au mouvement.

On entend ici par « magnétomètre » un capteur mesurant le champ magnétique environnant. Dans le cadre de la présente invention, après une étape de calibrage, on utilise le magnétomètre afin de percevoir le champ magnétique terrestre (le nord magnétique terrestre) puis le nord géographique : il s'agit d'une utilisation de type boussole.

On entend ici par « gyromètre » un capteur mesurant la vitesse angulaire et de déduire la vitesse rotationnelle (tangentielle à un mouvement). Dans le cadre de la présente invention on utilise le gyromètre pour parfaire le calcul d'orientation de chaque dispositif.

On entend ici par « centrale inertielle » un ensemble de capteurs permettant la détermination du déplacement relatif en chaque instant. Dans le cadre de la présente invention, elle comprend un accéléromètre, un gyromètre et un magnétomètre. L'ensemble de ces informations permet de calculer un couple « distance, angle » (coordonnée polaire), description du déplacement dans un repère inertiel. Dans certains modes de réalisation de l'invention la centrale inertielle ne comprend qu'un accéléromètre et un magnétomètre.

On entend par mesure « RSSI » (abréviation du terme anglais « Received Signal Strength Indication ») une mesure de la puissance du signal reçu sur une antenne; le signal peut être un signal Bluetooth. Dans le cadre de la présente invention, on utilise le RSSI comme distance dans son propre espace métrique ou comme mesure de séparation entre l'émetteur et le récepteur. L'atténuation du signal reçu sur une antenne est exprimée sur une échelle logarithmique (en général en décibel). Par conséquent, la distance dérivée de l'atténuation du RSSI (« distance RSSI ») n'est pas directement liée à la distance exprimée en échelle métrique mètre SI.

On entend ici par « filtre » un processus réduisant les imperfections du signal (tel que son bruit) en se focalisant sur l'extraction de données utiles.

On entend ici par « intégration » une opération mathématique visant à transformer l'information d'accélération en une information de vitesse.

On entend par « BLE » (abréviation de « Bluetooth Low Energy ») un standard de communication basé sur la bande de fréquence ISM 2,4 GHz (Bluetooth) permettant un échange d'informations avec un ou des hôtes distants.

On entend ici par « correction des orientations » le fait que chaque dispositif E peut déterminer (après traitement) son orientation dans un repère orthonormé à trois dimensions, ici défini par le nord géographique et la gravité. La correction est ici nécessaire afin de corréler les repères de dispositif E et du dispositif P.

On entend ici par espace métrique un ensemble au sein duquel une métrique définie la notion de distance. Cette distance permettra d'interpréter l'éloignement entre les éléments de l'ensemble. L'espace métrique de la mesure RSSI est exprimé en dBm (décibels relatifs à une puissance d'un milliwatt) et l'espace métrique d'une mesure d'un déplacement, comme peut l'estimer une centrale inertielle, est exprimé en mètres (unité de base de longueur du système SI).

On entend ici par équation de Friis, la formule des télécommunications permettant d'obtenir un ordre de grandeur de la puissance radio reçu par une antenne à une certaine distance de l'émetteur.

On définit ici comme « aberrant » toute mesure, estimation ou calcul contraire au sens commun propre aux capteurs ou aux processus d'origine dans le contexte d'utilisation.

## 2. Description détaillée

A) Buts de l'invention

L'invention vise à localiser un objet distant E par rapport à une référence P. Plus précisément, elle vise à localiser un dispositif E par un dispositif de référence P. Elle prend en compte notamment les buts suivants :

EP 3 227 705 B1

- La détection du dispositif E par le dispositif P (par exemple la surveillance de l'enfant par le parent) doit être effective quel que soit le milieu d'utilisation (intérieur, extérieur);
- L'utilisation ne doit pas nécessiter un matériel supplémentaire spécifique autre qu'un boitier (dispositif E) porté par la personne surveillée, le dispositif P pouvant être un dispositif grand public polyvalent de type Smartphone, muni d'un programme (application) spécifique. Le système est indépendant de tout réseau autre que celui utilisé pour le dialogue entre E et P;
- La précision de l'estimation de la direction et de la distance du dispositif distant doit être suffisamment précise pour le but poursuivi, c'est-à-dire retrouver E.

La dépendance du processus à des techniques de localisation déportées (ex. : satellitaire comme le GPS, ou réseau mobile GSM) pour le dispositif E ne peut être envisagée du fait de l'incapacité de recevoir un signal suffisant dans certains milieux clos (bâtiment, centre commercial), ou zone géographique.

Les méthodes dites de triangulation ou encore trilatération ne sont pas envisageables car elles nécessitent des références fixes (amers) tiers. La navigation pédestre à partir des informations de la centrale inertielle ne permet pas de déterminer la distance et la direction avec une précision suffisante du fait de sa détérioration dans le temps. Les méthodes dites de coopérations intelligentes (association de différentes méthodes) permettent de contourner certains inconvénients propres à chaque technique (par exemple l'association de la navigation pédestre et du GPS), mais ne sont pas en accord avec les buts cités ci-dessus.

On note que le but de l'invention n'est pas la géolocalisation du dispositif E par rapport au référentiel terrestre (coordonnées géographiques terrestres) ; cette géolocalisation du dispositif E est cependant possible en se référant aux coordonnées de géolocalisation du dispositif P, par exemple si le dispositif P est un Smartphone disposant d'un module de géolocalisation par satellite.

Les buts de l'invention sont atteints par un procédé qui exploite une indication sur l'intensité du signal reçu (perception de l'atténuation entre un signal émis et un signal reçu) en relation avec des données de déplacement provenant d'une centrale inertielle d'un ou des dispositif(s) (E et P).

B) Présentation générale de l'invention

Selon l'invention, le dispositif E comprend une centrale inertielle, un microprocesseur et un émetteur/récepteur utilisant des ondes radioélectriques (ondes radio). Avantageusement ledit émetteur/récepteur opère dans les bandes de fréquences dites ISM (abréviation de « Industrial, Scientific and Médical »). Un standard de communication sans fil qui peut être utilisé dans le cadre de la présente invention est par exemple le standard Bluetooth (bande ISM de 2,4 GHz). Le dispositif P comprend lui aussi une centrale inertielle ainsi qu'une émetteur/récepteur compatible avec l'émetteur/récepteur du dispositif E (de préférence un système Bluetooth).

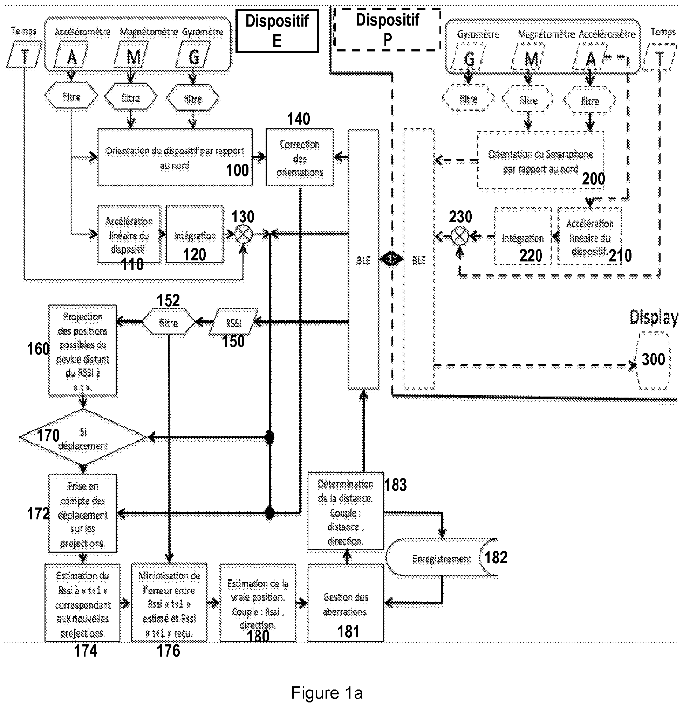

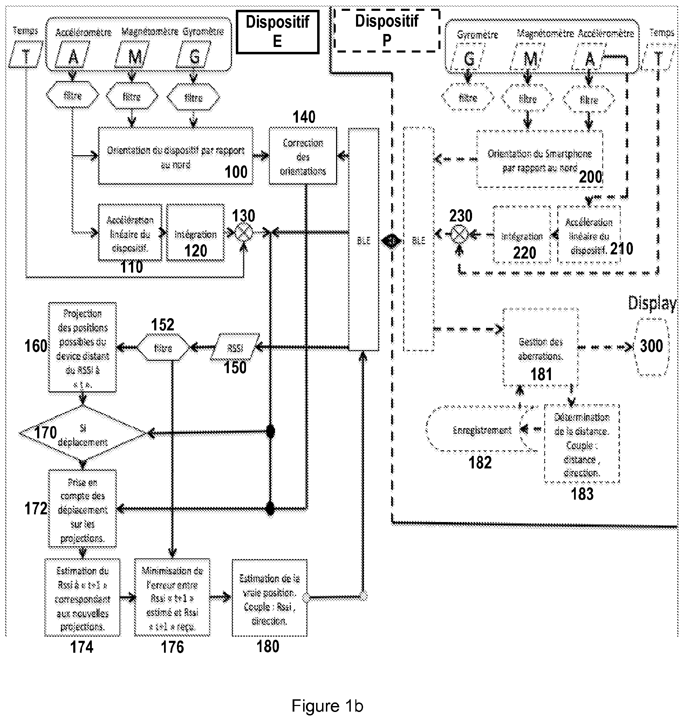

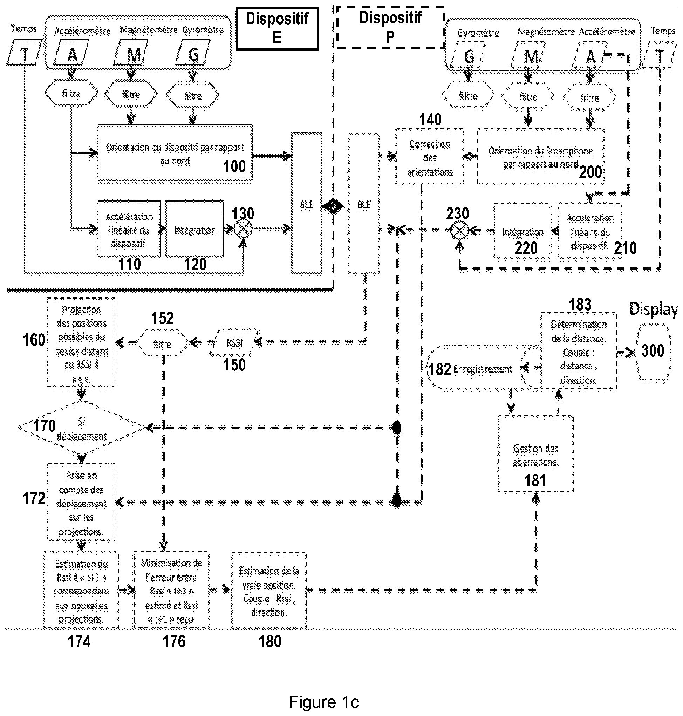

La figure 1 montre l'architecture physique du système, les étapes du procédé et les flux d'information entre les dispositifs E et P. Le procédé est basé sur quatre informations brutes provenant chacune d'une mesure physique, à savoir la mesure provenant de l'accéléromètre, du gyromètre, du magnétomètre et la mesure du RSSI. Ainsi un maximum de quatre informations brutes peuvent transiter entre le dispositif E et le dispositif P. Comme il sera expliqué ci-dessous on préfère cependant diminuer le flux d'information entre les deux dispositifs. Une description détaillée de ce mode de réalisation sera donnée ci-dessous en section J.

Selon des modes de réalisation de l'invention montrés sur les schémas de la figure 1 le couple (distance, angle) relatif au déplacement du dispositif E est calculé par le microprocesseur de ce dernier. Ainsi au plus trois informations seulement seront à transférer du dispositif E au dispositif P, à savoir : la distance, l'angle, et le RSSI.

La figure 1a décrit un mode de réalisation pour l'architecture physique du système selon l'invention, répartie sur le dispositif E (mobile ou fixe) et le dispositif P (ici un Smartphone). Chacun des deux dispositifs comprend une centrale inertielle. Chacun des dispositifs P et E traite les données A, M, G qu'il mesure. Les deux dispositifs communiquent ici avec une liaison de données BLE. Le calcul de la position de E par rapport à P est effectué par le dispositif E et transmis à P pour affichage.

Dans un mode avantageux de l'invention, le procédé est exécuté de manière à traiter un maximum d'informations dans le microprocesseur du dispositif E afin de minimiser la quantité de données à transférer vers le dispositif P. Le fait de minimiser la quantité des données à transférer diminue également la consommation électrique du dispositif E. Le dispositif P comprend les moyens d'affichage de la position du dispositif E ; ces moyens comprennent avantageusement un écran d'affichage. Le dispositif E ou P comprend également une unité de mémoire.

L'exemple donné sur la figure 1a pour la distribution des tâches entre les dispositifs E et P répond à cet objectif, mais on peut redistribuer autrement les tâches entre les deux dispositifs. Les figures 1b et 1c montrent d'autres possibilités de répartition.

La figure 1b montre un mode de réalisation dans lequel le dispositif E mesure et interprète les données issues de sa propre centrale inertielle, reçoit du dispositif P les informations relatives au mouvement de P et exécute l'ensemble des calculs hormis le calcul des aberrations. Le dispositif P mesure et interprète les données issues de sa propre centrale inertielle et transmet l'information relatives à son mouvement à E. Après avoir reçu de E l'estimation de la position de E, le dispositif P vérifie les aberrations possibles de la position de E, puis affiche le résultat sur son écran.

La figure 1c montre un mode de réalisation dans lequel le dispositif E mesure et interprète les données issues de sa propre centrale inertielle puis transmet ces informations à P. P mesure et interprète les données issues de sa propre centrale inertielle, estime la position de E par rapport à lui-même, calcule les aberrations et détermine la position de E par rapport à P et affiche ce résultat sur son écran.

Dans une variante du mode de réalisation selon les figures 1a, 1b et 1c, les deux dispositifs P et E n'ont pas impérativement besoin chacun d'une centrale inertielle composée d'un accéléromètre, d'un magnétomètre et d'un gyromètre : le procédé peut être exécuté si l'un des deux dispositifs dispose d'une centrale inertielle composée d'un accéléromètre et soit d'un magnétomètre soit d'un gyromètre. En particulier, le dispositif P (qui peut être un dispositif de type « smartphone ») peut ne pas disposer de gyromètre mais uniquement d'un accéléromètre et d'un magnétomètre. Cependant, il est préférable que chacun des dispositifs P et E dispose de sa centrale inertielle.

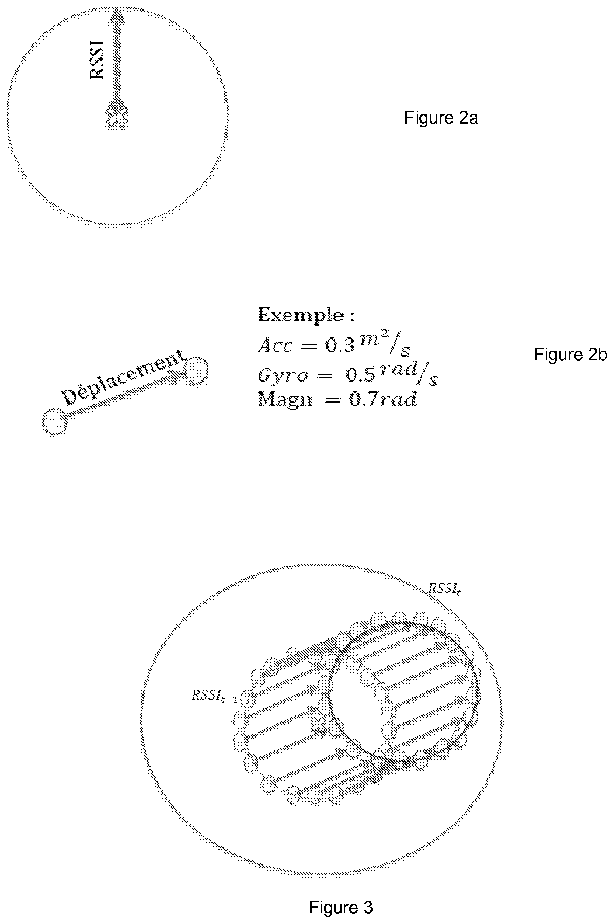

Le procédé selon l'invention est basé sur l'association (coopération intelligente) de deux informations, à savoir la mesure RSSI et les mesures de déplacement de E et P permettant d'estimer la distance et l'angle entre E et P entre deux instants. Cela est illustré sur la figure 2.

La figure 2a représente une mesure RSSI, la croix représentant le repère, i.e. le référentiel du dispositif P), la flèche représentant la puissance du signal reçu sur l'antenne, le cercle représentant la possible localisation du dispositif E.

La figure 2b représente une mesure du déplacement du dispositif E obtenu grâce à une centrale inertielle, qui comprend une composante directionnelle (issue du magnétomètre), une composante d'accélération (issue de l'accéléromètre) et une vitesse angulaire (issue du gyromètre).

La figure 3 montre la localisation du dispositif E à l'instant $t_n$, dont la distance par rapport à P est évaluée dans l'espace métrique de la mesure RSSI. Ne prenant en compte que cette métrique, le dispositif E peut être localisé n'importe où sur le cercle de rayon « RSSI ». Lors du déplacement du dispositif E entre $t_n$ et $t_{n+1}$, le cercle de rayon RSSI se déplace dans la direction du déplacement du dispositif E.

Selon l'invention on détermine un cercle autour du dispositif P et de rayon RSSI sur lequel se situe de manière sure le dispositif E (à l'incertitude de la mesure près). Le raisonnement du processus se fait en restant dans l'espace métrique de la mesure RSSI, « le domaine RSSI ». Tant qu'aucun des dispositifs E et dispositif P ne se déplacent, on ne peut obtenir d'information angulaire ou de distance avec une précision suffisante. Dès que le dispositif E et/ou le dispositif P se déplacent, on va prendre en considération ce déplacement après transformation dans le « domaine RSSI ». On utilise le déplacement déterminé à partir de l'accéléromètre et du temps passé ainsi que la direction, par rapport à la référence P, à partir de l'association d'un couple de données accéléromètre/gyromètre ou d'un couple accéléromètre/magnétomètre (préféré) ou par les trois à la fois (cela dépend du contexte magnétique environnant : la présence d'un champ magnétique local peut perturber la mesure du magnétomètre).

Dans le cadre de l'utilisation de la centrale inertielle, le procédé selon l'invention permet de déterminer le déplacement du dispositif distant E ou P en chaque instant. Lorsque celui-ci est porté par un humain, comme dans le cadre d'une navigation pédestre, cette dernière consiste à interpréter le déplacement humain en tant que « pas » et à déterminer une distance et une direction à chacun de ces pas.

Pour un dispositif E ou P en mouvement, l'accéléromètre mesure l'accélération longitudinale ressentie en mètre carré par seconde ($m^2$/s), le gyromètre mesure la vitesse angulaire ($\theta$ gyro/s) en radian par seconde et le magnétomètre mesure l'angle de décalage du repère propre au dispositif avec le nord magnétique ($\theta$ magn) en radian. Chacune de ces sources d'informations doit être paramétrée, filtrée, calibrée, corrigée dans le temps. Généralement, la détection d'un pas (acte d'un choc suivi d'une accélération) se fait avec l'accéléromètre en détectant le pic d'accélération sur l'axe de la gravité, colinéaire à l'axe sagittal du porteur. La mesure de distance du déplacement peut être estimée par différentes méthodes à partir de la distance moyenne parcourue en un pas, connaissant la grandeur des jambes, ou par intégration des valeurs de l'accéléromètre multipliée par le temps passé. Pour cette dernière technique, des processus type ZUPT (Zero velocity UPdaTe) peuvent permettre de limiter les erreurs d'intégration.

Estimer une trajectoire par intégration du mouvement relatif à chaque instant ne peut pas être envisagé selon le procédé de l'invention. En effet le porteur du dispositif E peut effectuer des mouvements « particuliers », erratiques, qui diffèrent d'un mouvement « normal » (par exemple d'une marche « normale »). De plus, l'imprécision des capteurs peut elle aussi engendrer des erreurs d'intégration.

Dans le cadre d'une mesure RSSI (dans son propre espace métrique i.e. : non pas exprimée en mètre mais en dBm), l'utilisation de l'équation de Friis (qui sera expliquée en plus grand détail ci-dessous) permettant de traduire la mesure RSSI en mètre, est difficilement applicable dans le contexte d'utilisation.

Selon l'invention, les seules valeurs observables fiables (à leur précision de mesure près) que l'on prend en compte sont la mesure RSSI (et non pas son interprétation en mètre) en un temps t donné, ainsi que les données issues de chaque capteur de la centrale inertielle à disposition des dispositifs E et P.

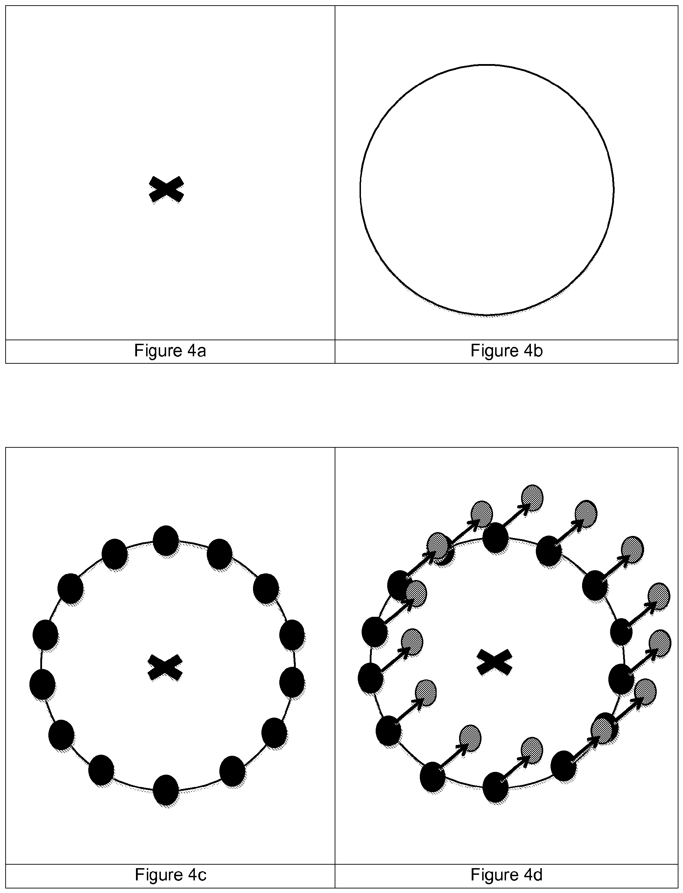

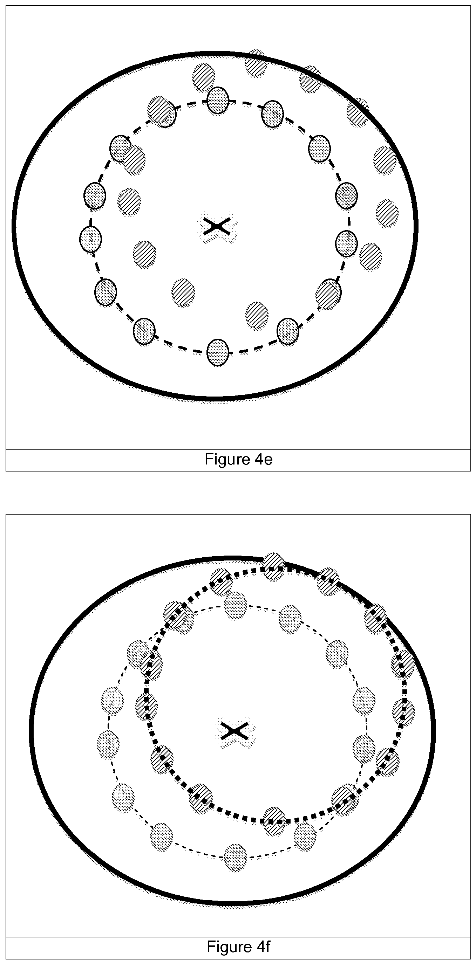

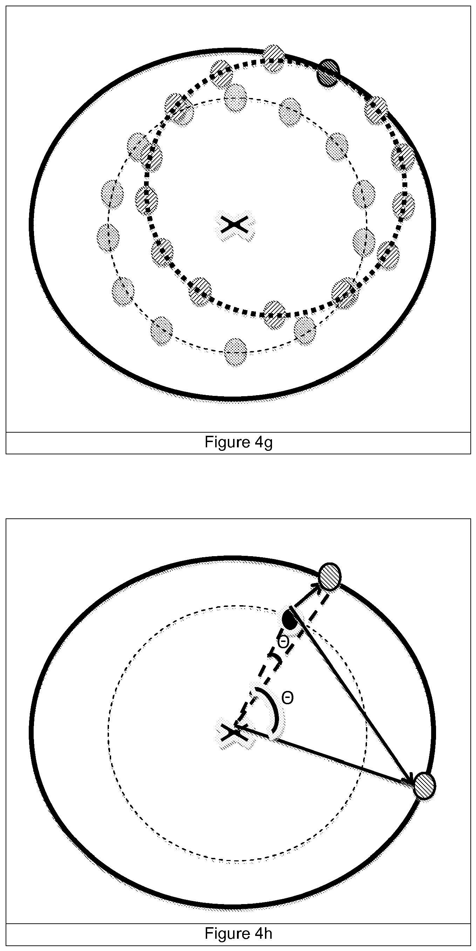

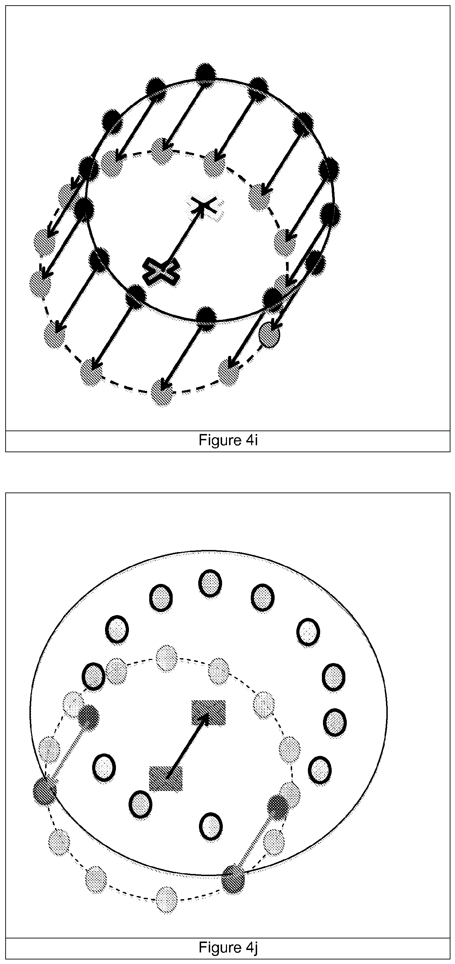

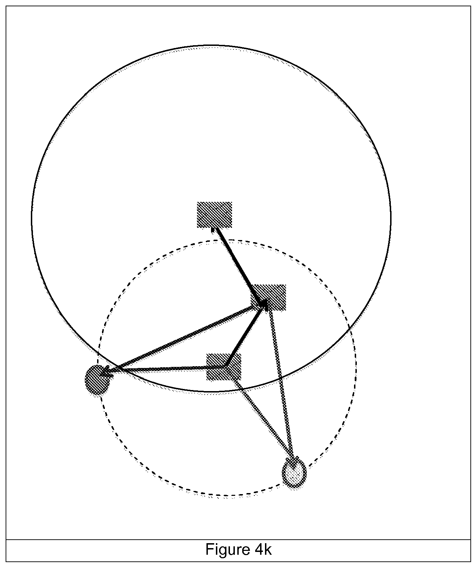

Selon l'invention, à partir d'une mesure de la puissance en réception d'un signal reçu d'une antenne en dBm (mesure RSSI), on associe à chaque position potentielle de E déterminée à partir de la mesure RSSI à l'instant $t_n$, le déplacement lui-même estimé à partir de la centrale inertielle après transformation dans le « domaine RSSI ». (D'une manière générale, le « domaine RSSI » (ou « métrique RSSI ») représente un espace de mesures où l'unité considérée est en dBm ; cette unité représente un rapport entre la puissance mesurée en décibels et un milliwatt.) L'étape permettant d'estimer la direction se fait par minimisation de l'erreur entre le cercle estimé par projection du déplacement de E ou P sur les positions de E à l'instant $t_n$ et la nouvelle mesure du RSSI, à l'instant présent « $t_{n+1}$ ». Cela sera expliqué en plus grand détail ci-dessous sous point C en relation avec la figure 4.

Le dispositif P peut se déplacer. Il faut donc prendre en compte son mouvement dans les différentes étapes. Comme il sera expliqué ci-dessous, le déplacement de cette référence P apporte une solution au problème de localisation du dispositif E dans le cas où ce dernier est immobile.

Après synchronisation du nord magnétique de chaque dispositif, l'initialisation du processus au premier instant (figure 2a) permet de définir les positions possibles de E dans l'espace métrique RSSI à un instant $t_n$.

Lors du deuxième instant ($t_{n+1}$) (figure 3), le déplacement de E entre $t_n$ et $t_{n+1}$ permet de définir la projection du déplacement du sujet dans l'espace métrique RSSI de l'instant $t_n$. À cet instant $t_{n+1}$ une nouvelle mesure du RSSI s'opère et est comparée à chaque position estimée de E après projection. Ensuite, intervient l'identification de la position du sujet en mettant en oeuvre un calcul dit de gestion des aberrations ou encore de gestion temporel La mise en œuvre des différentes étapes du procédé selon l'invention dans les dispositifs P et E sera décrite en plus grand détail ci-dessous sous point D.

C) Présentation générale du procédé selon l'invention

Nous donnons ici une description générale du procédé de détermination des coordonnées exactes d'un dispositif E en mouvement ou non dans un plan cartésien centré sur P lui-même fixe ou en mouvement, à partir d'une centrale inertielle à disposition dans E et/ou dans P et d'un module de communication selon l'invention en nous référant à la figure 4.

Dans une première étape, si l'on considère que E peut être mobile, on initialise les dispositifs E et P par leur synchronisation en angle par rapport au nord magnétique terrestre. Cette initialisation peut être effectuée par un utilisateur du dispositif P, notamment à la première mise en oeuvre du cycle de mesure. Dans un mode de réalisation préféré de cette étape, l'initialisation est effectuée de manière automatique, par un évènement déclencheur. Cet évènement déclencheur peut être la détection d'un mouvement du dispositif P ou du dispositif E par les centrales inertielles respectives.

Dans une seconde étape, en un instant $t_n$ on reçoit une mesure RSSI. En fonction de la mise en oeuvre du procédé, cette mesure peut être effectuée soit par le dispositif E soit par le dispositif P. Elle représente l'atténuation du signal émis par E ou P en fonction de la distance de séparation desdits dispositifs et du contexte de la mesure. À un instant (ex. : $t_n$) et en milieu non dispersif, la mesure RSSI de P vers E est théoriquement identique à la mesure E vers P.

Dans une troisième étape, on détermine à partir de la mesure RSSI de l'étape 2, l'ensemble des positions possibles du dispositif E par rapport à P à l'instant $t_n$. Ces positions peuvent être représentées par un cercle de rayon RSSI et de centre P.

Dans une quatrième étape, en fonction de la configuration technique retenue :

- le dispositif P reçoit à l'instant $t_{n+1}$ une information sur le déplacement du dispositif E calculé sur l'intervalle $[t_n t_{n+1}]$,
- ou le dispositif E perçoit à l'instant $t_{n+1}$ une information sur le déplacement du dispositif P calculé sur l'intervalle $[t_n t_{n+1}]$.

Après transformation de cette distance dans le « domaine RSSI », il est estimé par projection des positions de E à $t_n$, un ensemble de positions dans le domaine métrique RSSI du dispositif E par rapport au dispositif P à $t_{n+1}$.

Dans une cinquième étape, une nouvelle mesure de RSSI est disponible à l'instant $t_{n+1}$. Comme lors de la troisième étape, il est déterminé un ensemble de positions de E par rapport à P à l'instant $t_{n+1}$.

Dans une sixième étape, en fonction de la mise en oeuvre, le dispositif P ou E détermine par un algorithme comparatif ou d'autres algorithmes d'association, la relation entre les positions estimées à l'étape 4 et les positions déterminées du dispositif E à l'instant $t_{n+1}$ issues de l'étape 5.

Dans une septième étape appelée « gestion des aberrations », on détermine si la ou les nouvelles positions calculées à l'étape 5 sont plausibles, possibles ou vraisemblables par rapport aux positions déterminées aux instants précédents. Puis est estimée la position du dispositif E par rapport au dispositif P.

Dans un mode de réalisation avantageux de cette étape, on compare les coordonnées polaires (distance à partir du centre du repère et angle) de E par rapport à P entre $t_n$ et $t_{n-1}$ et/ou $t_{n-m}$ (avec m>1). On compare la ou les solutions de $t_n$ avec celles des instants précédents et on détermine quelle est la position à $t_n$. Le critère préféré sera la différence angulaire entre les points à $t_n$ et $t_{n-1}$ (exprimée en angle θ) corrélé à la distance à l'instant $t_n$. Différentes techniques seront présentées ci-dessous pour la gestion des aberrations.

Cette séquence est illustrée sur la figure 4 pour un exemple concret. L'étape 1 est représentée par la figure 4a, l'étape 2 par la figure 4b en un instant $t_n$. L'étape 3 est représentée par la figure 4c. A cet instant, la direction de E ne peut être déterminée, E peut se trouver n'importe où sur le cercle de rayon « RSSI ».

L'étape 4 est représentée par la figure 4d, où les flèches représentent le déplacement du dispositif E dans le « domaine RSSI » ; on effectue une projection du cercle représentant les positions possibles de E à l'instant $t_n$ en fonction de déplacement de E entre $t_n$ et $t_{n+1}$. Le nouveau cercle représente l'estimation des positions de E à l'instant $t_{n+1}$. En l'occurrence, le déplacement du dispositif E conduit à son éloignement du dispositif P. L'étape 5 est représentée sur la figure 4e, où de nouvelles positions de E peuvent être déduites à partir d'une nouvelle mesure RSSI à l'instant $t_{n+1}$. Elles sont représentées par le cercle extérieur (ligne noire).

L'étape 6 est représentée sur la figure 4f où l'on recherche la ou les zones minimisant l'erreur entre le cercle estimé à l'étape 4 (projection du cercle d'instant $t_n$ par l'interprétation du déplacement de E entre $t_n$ et $t_{n+1}$) et le cercle issu de la mesure RSSI à l'instant $t_{n+1}$ (étape 5). Lorsque les cercles se coupent, cette zone représente la ou les intersections entre les deux cercles.

L'étape 7 est illustrée sur les figures 4g et 4h. Dans un mode de réalisation, on détermine les positions dites « aberrantes » (illustrées sur la figure 4h) de façon à éliminer les mesures fausses (point d'intersection identifié sur la figure 4h) ; ce point d'intersection représente la position du dispositif E. Ce calcul des aberrations est nécessaire en particulier lorsque la détermination de la position de E (zone(s) de minimisation de l'erreur) conduit à des anomalies. Dans le cas théorique, les deux cercles se touchent en un point, et ce point pourra servir de référence pour l'étape suivante. Cependant, les mesures RSSI ainsi que les mesures des centrales inertielles étant, comme toute mesure physique, incertaines et imprécises, il est possible que les deux cercles ne se touchent pas, ou qu'ils se coupent et montrent deux intersections. Dans ces cas (qui peut également se présenter lorsque le dispositif P se déplace), on peut comparer chacune de ces localisations estimées (à $t_n$) aux précédentes (à $t_{n-m}$ avec m ≥1) pour supprimer la localisation la moins probable ou la moins plausible (on peut apparenter cette gestion à un suivi temporel). Dans le cas où les cercles ne se touchent pas, on peut déterminer le point qui correspond à la distance minimale entre les deux cercles.

A l'issue de l'étape 7, un nouveau cycle commence automatiquement avec l'étape 2 ; ainsi le dispositif P peut suivre en temps réel la direction du dispositif E. L'échelle temporelle (Δt) entre deux cycles (i.e. l'intervalle de temps [$t_n$ $t_{n+1}$]) peut être constante ou non.

Ce procédé peut être mise en oeuvre de différentes manières, dont certaines seront décrites ci-dessous à titre d'illustration.

Dans un premier mode de réalisation, l'intervalle Δt est fixe. De préférence, il débute au commencement d'un mouvement détecté par P ou par E. La valeur de Δt peut être préfixée, par exemple à une ou deux secondes.

Dans d'autres modes de réalisation, l'intervalle Δt n'est pas fixe.

Dans un deuxième mode de réalisation, la fin de l'intervalle Δt est définie par l'arrêt du mouvement ou par un changement d'accélération correspondant typiquement à la fin d'un pas humain.

Dans un troisième mode de réalisation, on ne choisit pas un Δt fixe mais un Δd fixe (i.e. la distance en mètre parcourue par le dispositif P et/ou le dispositif E lors d'un déplacement), tel que déterminé à partir de la centrale inertielle du dispositif P ou du dispositif E. La valeur de Δd peut être de l'ordre d'un mètre, mais cette valeur est avantageusement choisie à une valeur plus faible si la distance entre les dispositifs P et E est faible, et à une valeur plus élevée si la distance entre les dispositifs P et E est plus élevée. En effet, l'atténuation du signal (interprétée par une valeur de RSSI) est plus perceptible si les dispositifs P et E sont proches. Il est souhaitable d'éviter qu'entre deux mesures successives, la différence entre les mesures RSSI reçues soit nulle ou non significative (sachant que la mesure RSSI est en dBm, c'est-à-dire dans une échelle logarithmique). On note que si à la fois P et E se déplacent (potentiellement en même temps), on calcule chacun de ces déplacements, puis on les projette sur le cercle des positions initiales déduites de E (étape 2). Suivant la mise en oeuvre, le dispositif P ou E qui effectue ce calcul aura besoin de connaitre les déplacements des deux dispositifs; cela est décrit en plus grand détail ci-dessous.

Dans encore un autre mode de réalisation, on ne choisit pas un Δt fixe mais une différence des mesures RSSI (ΔRSSI) fixe entre deux instants, suffisamment grande pour pourvoir être établie avec une signification suffisante.

On note que d'une manière générale, plus Δt est faible, plus la localisation est précise, mais Δt doit être suffisamment grand pour que les mesures RSSI soit mesurablement différentes entre $t_n$ et $t_{n+1}$.

La localisation du dispositif E par le dispositif P nécessite un déplacement relatif entre les deux dispositifs (un déplacement de E ou de P ou des deux). Dans un cas fréquent, ce sera le dispositif E qui se déplace (et le dispositif P peut être fixe ou mobile) : par exemple le parent (porteur du dispositif P) assis sur un banc surveille son enfant (porteur du dispositif E) dans une aire de jeu. Si le dispositif E ne se déplace pas, c'est le déplacement du dispositif P qui permet de localiser le dispositif E. La prise en compte du déplacement du dispositif P suppose que ce dernier intègre lui aussi une centrale inertielle.

La figure 4i illustre ce cas où le dispositif P se déplace. À $t_n$, le dispositif P se déplace, la centrale inertielle de P permet de détecter la direction et la distance de ce déplacement, et on projette ce déplacement sur les positions de E déterminées à $t_n$ (mesure du RSSI à $t_n$). À la fin du déplacement de P (ou plus généralement à la fin de l'intervalle $\Delta t$, cette fin pouvant être déterminée, comme décrit ci-dessus en relation avec le déplacement du dispositif en mouvement, par la fin dudit déplacement), on reçoit une nouvelle mesure RSSI (grand cercle, figure 4j) et on calcule, comme décrit à l'étape 6 en relation avec la figure 4f, la ou les positions possibles du dispositif E par rapport au dispositif P. Comme indiqué à la figure 4j, cette comparaison conduit parfois à différentes solutions (suivant les imprécisions potentielles), et c'est la gestion des aberrations par un suivi temporel (i.e. la comparaison avec les localisations antérieures, par exemple à $t_{n-1}$) qui permet de décider quelle position définie au mieux la localisation de E (comme présenté dans l'exemple de la figure 4k).

Le procédé selon l'invention peut également être appliqué au cas où les dispositifs P et E se déplacent tous les deux en même temps.

D) Mise en oeuvre du procédé selon l'invention dans les dispositifs P et E

Les différentes étapes du procédé selon l'invention, peuvent être mises en oeuvre soit dans le dispositif P soit dans le dispositif E, convenablement configurés.

Nous décrivons ici en plus grand détail trois modes de réalisation pour intégrer les différentes fonctions du procédé dans les dispositifs P et E.

Dans un premier mode de réalisation, le dispositif E inclut l'ensemble des composants nécessaires au calcul de la position et à la gestion des aberrations, à savoir un microprocesseur configuré pour l'exécution des calculs nécessaires, une mémoire permettant l'enregistrement des données, un module de communication, une centrale inertielle (IMU, « Inertial Measurement Unit » en anglais) et d'autres matériels. Dans ce cas, durant l'étude, le dispositif P transmet les informations relatives à ses déplacements au dispositif E. Le résultat du processus, à savoir l'estimation de la position de E par rapport à P, est transmis au dispositif P qui affichera le résultat.

Dans un deuxième mode de réalisation, le dispositif E inclut l'ensemble des composants nécessaires au calcul de la positions à savoir un micro-processeur configuré pour l'exécution des calculs nécessaires, un module de communication, une centrale inertielle (IMU) et d'autres matériels. Le dispositif P incorpore une mémoire lui permettant d'enregistrer les coordonnées polaires en chaque instant de la position de E par rapport à lui-même. Dans ce cas, durant l'exécution du procédé selon l'invention, le dispositif P transmet les informations relatives à ses déplacements au dispositif E. Le résultat est transmis au dispositif P, validé par l'étape de gestion d'aberrations puis affiché.

Dans un troisième mode de réalisation, le dispositif E inclut simplement les composants nécessaires à la mesure et au calcul de son déplacement relatif à lui-même à savoir un micro-processeur adapté au calcul, un module de communication, une centrale inertielle (IMU) et d'autres matériels. Le dispositif P incorporera une mémoire lui permettant d'enregistrer les coordonnées polaires des positions de E en chaque instant, ainsi qu'un micro-processeur lui permettant d'effectuer le calcul de la position. Le dispositif E transmet l'estimation de son déplacement au dispositif P qui met en oeuvre les autres étapes du procédé, effectue le processus et estime les coordonnées polaires de la position du dispositif E par rapport à lui-même (P), gère les aberrations et affiche le résultat.

Le procédé selon l'invention peut être exécuté avec une pluralité de dispositifs E, dont chacun émet son propre identifiant et/ou sur une fréquence différente. Cela permet à un dispositif P de surveiller plusieurs dispositifs E en même temps.

E) Description de l'utilisation de la mesure RSSI

Nous donnons ici une description générale du procédé utilisant la mesure RSSI interprétation de l'atténuation du signal reçu par une antenne.

L'utilisation de la solution impose que le procédé de localisation d'un dispositif E par rapport à P soit indépendant des réseaux externes et réduits aux seules communications entre P et E ou entre E et P. Ainsi les méthodes classiques de triangulation, trilatération et autres processus utilisant des matériels tiers ou des reconnaissances du milieu d'étude (reconnaissance du champ magnétique ou radioélectrique, méthodes de type « fingerprinting ») ne peuvent être envisagées pour le procédé selon l'invention.

De plus, la solution doit pouvoir fonctionner dans un milieu clos ou non, sur un champ proche de quelques centaines de mètre. Cela réduit les techniques utilisables aux ondes radioélectriques.

Dans le cadre de l'utilisation d'ondes radioélectriques UHF (Ultra High Frequencies) dans des domaines comme le GSM, Bluetooth, Wifi, GPRS, EDGE, UMTS, GPS (etc.), la fréquence f utilisée se situe dans la gamme 300 MHz $\leq$ f $\leq$ 3 GHz. La longueur d'onde $\lambda$ (période du signal) est dans la gamme 1 m $\geq \lambda \geq 0,10$ m. Dans le vide ou dans l'air, le signal se propage à la vitesse de la lumière (300 km/s) et il sera quasi impossible par un matériel grand public d'estimer une distance de quelques dizaines de mètres par une mesure de temps de vol type TOF, TOA ou TDOA (cette approche est utilisable pour un signal de type GPS, compte tenu de la grande distance qui sépare la terre des satellites).

Hormis les solutions de type centrales inertielles, les mesures inter-dispositif (E et P) ne peuvent, dans la mise en oeuvre choisie, s'effectuer que par analyse d'une mesure traduisant le rapport de puissance émetteur/récepteur.

Le procédé selon l'invention utilise une estimation par interprétation de l'atténuation du rapport de puissance du signal émis par rapport au signal reçu ; celle-ci s'opère lorsque la puissance du signal reçu sur l'antenne s'atténue ou croit. Il existe différentes règles permettant de déterminer la distance à partir de cette mesure.

On sait que le RSSI (Received Signal Strength Indicator) est une mesure en dBm représentant un facteur dix du logarithme du rapport de la puissance reçue et de la puissance émise. Ainsi théoriquement, la puissance reçue est inversement proportionnelle au carré de la distance.

La transformée de Friis est un équation permettant de transformer une mesure RSSI en une distance en mètre à partir d'un ensemble de variables propres aux systèmes émetteur et récepteur. Cette distance est réellement l'analogie de la distance séparant ces derniers si et seulement si le signal parcourt un chemin directe (une droite) entre les deux éléments (émetteur/récepteur). Cette estimation est basée sur la puissance émise, le gain des deux antennes, la longueur d'onde utilisée ainsi que la distance séparant l'émetteur du récepteur :

$$Pr(dBm) = -20*log(4\pi/\lambda) - 10*n*log(d) + Gt + Gr + Pt(dBm)$$

où :

- Pr, Pt représentent la puissance d'émission et de réception du signal en dBm;
- $\lambda$ correspond à la longueur d'onde du signal émis;
- n représente le facteur d'affaiblissement de la vitesse du signal (appelé en anglais « path loss exponent »): dans un espace libre, la puissance est supposée décroître avec la distance par une relation inverse au carré (n=2) ;
- Gt, Gr représentent les gains des antennes d'émission et de réception.
- d correspond à la distance entre l'émetteur et le récepteur.

L'équation de Friis peut être formulée de sorte à calculer la distance entre l'émetteur et le récepteur.

$$log(d) = (Pr(dBm)-K) / (-10*n)$$

$$ln(d)/ln(10) = (-Pr(dBm)+K) / (10*n)$$

$$d = exp(ln(10) * [(-Pr(dBm)+K) / (10*n)])$$

$$d = 10 ^\wedge [(-Pr(dBm)+K) / (10*n)]$$

où K représente une constante relative aux différents gains et puissance. « exp » la fonction exponentielle et « ^ » la fonction exposant.

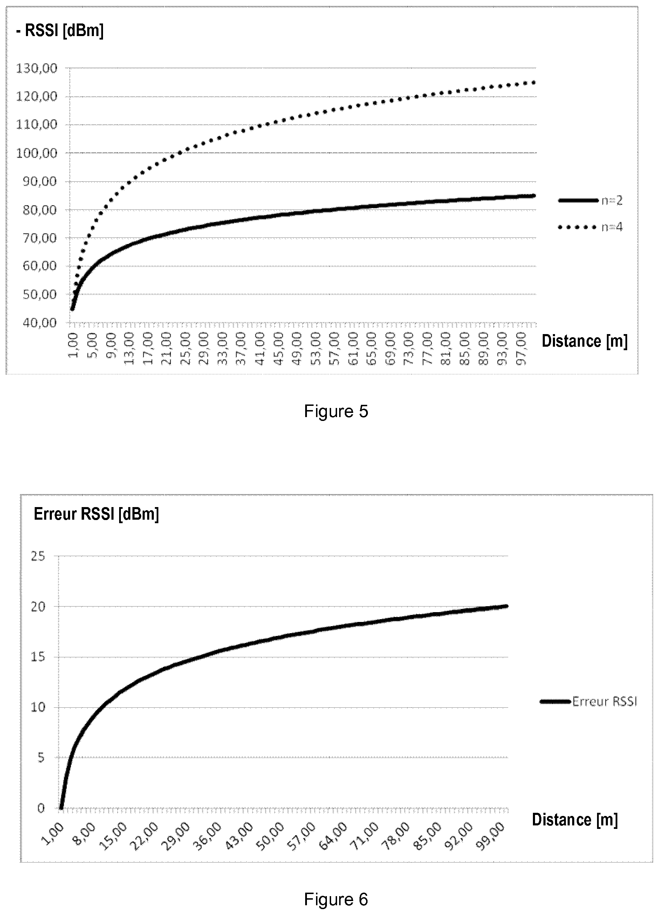

La figure 5 illustre la valeur théorique de Pr ou la mesure RSSI en fonction de la distance en mètre entre l'émetteur et le récepteur (pour une observation plus simple on porte sur la figure l'opposé des valeurs RSSI). On pose une valeur de K à -45dBm (mesure du RSSI à 1 mètre). On observe que le coefficient n (« path loss exponent ») influe fortement sur les valeurs de la distance évaluée à partir de la mesure RSSI.

Le plus souvent, les valeurs de n et K sont estimées de façon empirique. Elles doivent être recalculées pour chaque dispositif et « n » doit être mis à jour lors d'un changement de l'environnement (ex. : lieu, humidité, etc.).

La mesure de distance entre deux dispositifs par utilisation seule de la mesure RSSI est mentionnée dans la littérature mais peu de solutions techniques utilisent cette méthode. Dans le cas d'un fonctionnement en intérieur, l'interprétation de la distance par utilisation du RSSI est encore plus difficile du fait des rebonds possible du signal sur les différentes parois existantes dans cet environnement.

L'inventeur s'est rendu compte qu'il est peu probable qu'il existe une solution pour estimer la distance et la direction directement à partir d'un traitement RSSI pour les raisons suivantes :

- Le fait de ne pas pouvoir prévoir la présence d'éléments interférents avec le signal envoyé comme une personne/obstacle se plaçant dans la trajectoire du signal reçu par le récepteur. Ceci cause une atténuation de la puissance du signal reçue par l'antenne.
- Plus la distance augmente, plus la fiabilité du calcul par interprétation du RSSI diminue. Les causes sont la réflexion du signal émis, la perte de puissance par le contexte environnemental, etc.

- L'orientation du « dispositif » et sa position sur le porteur peuvent changer, ce qui rend l'estimation des paramètres de l'équation de Friis encore plus difficile (en pratique, le cône d'émission peut varier suivant l'orientation de l'antenne et la conception électronique du dispositif peut avoir une influence sur la directivité de celui-ci).

En considérant que le milieu de l'étude peut varier, on constate qu'aucune des méthodes selon l'état de la technique ne permet de calculer avec une précision suffisante la distance entre l'émetteur et le récepteur. On observe qu'une erreur d'estimation du coefficient n (« path loss exponent ») implique une erreur du calcul de la distance croissante avec la distance de séparation entre émetteur et récepteur.

A titre d'exemple, considérons K = -45 et n=2. La figure 6 montre l'erreur RSSI commise si on effectue le calcul avec un coefficient n=3 au lieu de n=2. L'erreur est exprimée par la valeur absolue de la différence des valeurs RSSI pour n=2 et n=3. On observe que plus la distance entre émetteur et récepteur est importante, plus l'erreur croît.

Le coefficient n (« path loss exponent ») étant une variable difficilement maitrisable, il est nécessaire de trouver un compromis judicieux permettant d'associer la mesure RSSI et l'estimation du déplacement issu de chacune des centrale inertielles. Pour cela, le procédé selon l'invention résout la localisation du dispositif E dans l'espace métrique RSSI et transforme la distance en mètre calculée par chacune des centrales inertielles dans le domaine RSSI. En effet, ces dernières estimant des distances de l'ordre du mètre (typiquement entre 0,1m et 2m), l'erreur potentielle due à une mauvaise estimation du coefficient n n'aura qu'une faible incidence sur le résultat du calcul de la position.

Posons $\Delta d$ la distance du déplacement calculée à partir des informations fournies par la centrale inertielle de E ou P entre les instants $t_n$ et $t_{n+1}$. À ce déplacement en mètres, correspond un déplacement dans le « domaine RSSI » que nous notons ici $\Delta$RSSI. Le calcul du $\Delta$RSSI (transformation du $\Delta d$ en $\Delta$RSSI) sera explicité dans la section suivante. Du fait de la non-linéarité de l'équation de Friis, la valeur du $\Delta$RSSI pour un $\Delta d$ fixe change en fonction de la valeur du RSSI à l'instant $t_n$ considéré.

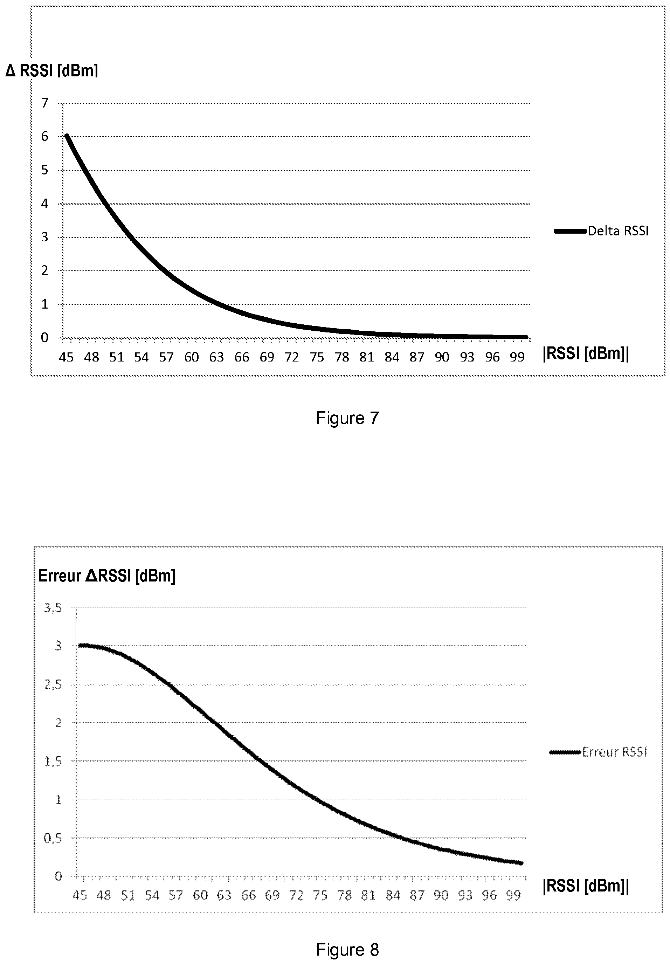

La figure 7 illustre l'évolution du « $\Delta$RSSI » en fonction du RSSI mesuré à $t_n$ (cas K = -45, n = 2) pour un déplacement de $\Delta d$ = 1 mètre. On observe que plus le RSSI mesuré est important plus le « $\Delta$RSSI » est faible. Afin de garder une valeur de « $\Delta$RSSI » significative, la mesure du déplacement $\Delta d$ devra être suffisante (i.e. évoluant en fonction de la distance de séparation de E et P).

Considérons à présent une erreur sur l'estimation du paramètre n (n=3 au lieu de n=2) et observons l'erreur sur les $\Delta$RSSI. Cette erreur est obtenue par la valeur absolue des différences des $\Delta$RSSI calculée avec n=2 et n=3. Nous posons $\Delta d$=1 et K=-45. On observe sur la figure 8, que l'erreur sur les valeurs de $\Delta$RSSI due à une mauvaise estimation du coefficient n (« path loss exponent ») engendre une erreur pouvant dans le cas de l'étude être interprétée comme faible (moins de 1,5dBm à $\approx$ 10 m). Un pas normal peut être considéré comme inférieur à 1 m, ce qui diminue la valeur de $\Delta d$ par rapport à l'illustration, l'erreur est donc encore plus faible. Toutefois, la gestion des aberrations par suivi temporel permet de corriger le résultat dans le cas où l'erreur impacterait l'estimation de la position de E dans le « domaine RSSI ».

Le procédé selon l'invention comprend donc nécessairement une étape dans laquelle on transforme le déplacement métrique en mètre (provenant de la centrale inertielle) en déplacement dans le « domaine RSSI » (dBm). Si par exemple, la centrale inertielle mesure un déplacement $\Delta d$ de 1 mètre (distance du déplacement), on associe par transformation cette distance de déplacement à un $\Delta$RSSI de x dBm. Cette transformation est délicate car elle implique les paramètres K et n de l'équation de Friis qui dépendent du dispositif et de l'environnement.

Nous avons montré que la valeur du $\Delta$RSSI pour un $\Delta d$ donné dépend de la distance entre les dispositifs P et E et de l'exosystème de ces deux dispositifs (i.e. de l'environnement qui sépare ces deux dispositifs, dans la mesure où il peut influer sur la propagation des ondes RF). Comme expliqué ci-dessus, cet environnement est pris en compte par le coefficient n (« path loss exponent ») dans l'équation de Friis : Théoriquement n = 2 dans un environnement « plein air » (espace libre), mais différents tests montrent que n évolue entre 2 et 4 dans un espace perturbé par des arbres, des murs, des voitures etc.

Plus la valeur de $\Delta d$ (i.e. le déplacement entre deux mesures à $t_n$ et $t_{n+1}$) est importante, moins l'estimation de $\Delta$RSSI risque d'être précise (à cause de l'incertitude de n). On choisit donc avantageusement un intervalle de temps $\Delta t$=$t_{n+1}$-$t_n$ entre deux instants de mesure du déplacement $\Delta d$ de manière à avoir un $\Delta$RSSI faible mais statistiquement significatif (la confiance du calcul basé sur un « petit » pas (typiquement 0,6m) sera plus importante que sur un calcul basé sur un « grand » pas (typiquement 1,5m)).

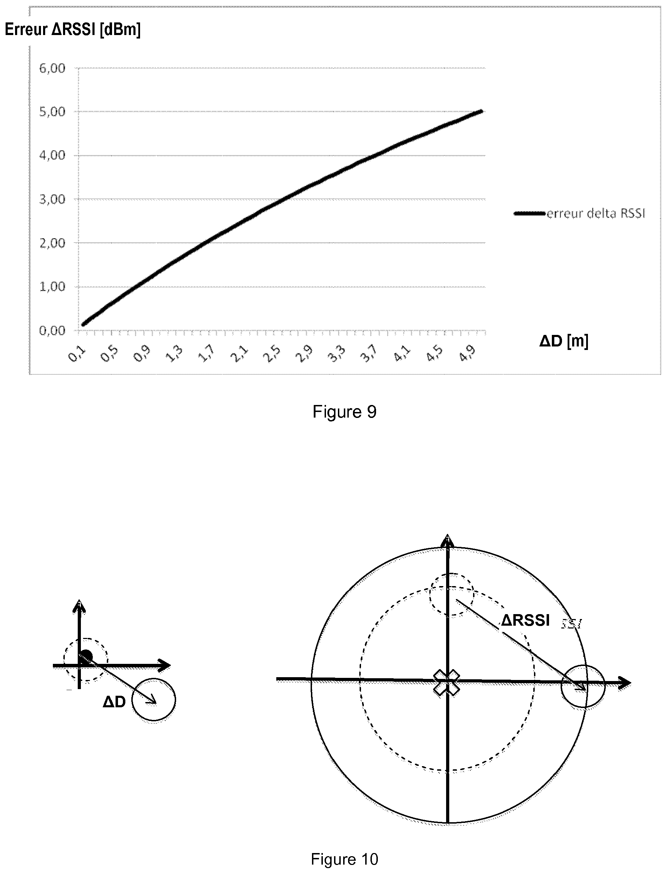

La figure 9 illustre l'erreur sur les $\Delta$RSSI relative à une mauvaise estimation du coefficient n (n = 3 au lieu de n = 2) en fonction du $\Delta d$ considéré. Plus précisément, cette figure montre l'erreur en valeur absolue de la différence des $\Delta$RSSI calculés respectivement avec n=2 et n=3 en fonction du déplacement $\Delta d$ considéré (avec K= -45 et considérant un éloignement entre E et P mesuré par un RSSI à -70 dBm). On observe que plus le $\Delta d$ est important plus l'erreur est grande ce qui confirme les dits ci-dessus.

Dans la section suivante nous présentons les différents calculs et méthodes utilisées afin d'exploiter les mesures RSSI.

F) Description des calculs à partir des mesures RSSI

Nous décrivons ici en plus grand détail des solutions permettant d'interpréter le déplacement des dispositifs E ou P dans le « domaine RSSI » (dBm).

L'utilisation des techniques dites « classiques » permettant de transformer un rapport de puissance type RSSI en une valeur de distance sont soumises à l'évaluation de l'exosystème du matériel. Dans le cadre de l'utilisation de l'équation de Friis, deux paramètres sont à évaluer. Le premier correspond à la valeur initiale de la puissance reçue sur l'antenne (mesure RSSI) à une distance connue (variable K dans l'équation) pouvant être défini comme une constante (mesurée typiquement à 1 mètre). Le deuxième est relatif au facteur d'atténuation du signal nommé le « path loss exponent » (variable n dans l'équation) dont la valeur dépend de l'environnement de l'utilisation de la solution.

Une erreur d'appréciation de l'un de ces paramètres implique une erreur de l'estimation de la distance. Comme vu ci-dessus, cette dernière croit fortement lors de l'éloignement des deux dispositifs P et E.

Dans le cadre de l'invention, contrairement au cas classique où une transformation de la mesure RSSI vers une distance en mètre est effectuée pour un raisonnement basé dans l'espace métrique des mètres SI, l'ensemble des projections sont ici effectuées dans l'espace des mesures RSSI (dBm). Ce choix permet de limiter les erreurs dues à l'environnement (i.e. à une mauvaise estimation de n).

Afin de garder une précision suffisante quel que soit le contexte d'utilisation, on préfère, dans le cadre de la présente invention, utiliser l'équation de Friis pour le calcul de « petites » distances telles que le déplacement entre deux instants de E ou P. Cette transformation permet de projeter sur les positions potentielles de E à $t_n$ le déplacement de E ou P entre les instants $t_n$ et $t_{n+1}$ dans le « domaine RSSI » ; cela est illustré sur la figure 10.

Soit le vecteur de déplacement de E ou P noté Vect(R) dans le « domaine RSSI » entre les instants $t_n$ et $t_{n+1}$, centré sur le repère orthonormé propre à E ou P. On note $\theta[t_n\ t_{n+1}]$ l'argument du déplacement de E ou P. Supposons un déplacement de E, l'origine de Vect(R) est définie par la position de E à $t_n$ (considéré comme l'origine du repère associé à Vect(R)), le deuxième point constituant Vect(R) est défini par :

$$x= |\Delta RSSI[t_n\ t_{n+1}]|*\cos(\theta[t_n\ t_{n+1}]) ;$$

$$y= |\Delta RSSI[t_n\ t_{n+1}]|*\sin(\theta[t_n\ t_{n+1}]) ;$$

Avec $\Delta RSSI[t_n\ t_{n+1}]$, valeur du $\Delta RSSI$ aux instants $t_n$ et $t_{n+1}$.

Trois méthodes peuvent être citées pour le calcul de $\Delta RSSI[t_n\ t_{n+1}]$:

• Méthode 1 : On utilise un paramètre n fixe

Théoriquement, la valeur du paramètre n est 2 (cf. équation Friis). Une première méthode consiste à fixer la valeur de n à une valeur déterminée. Elle peut être définie par différents tests terrains ou correspondre à la valeur théorique (n=2). En pratique, cette dernière solution est valide lorsque les dispositifs E et P restent dans un champ proche et dans un contexte favorable à la mesure (ex. un parc extérieur avec une affluence modérée).

Soit Pr une valeur du RSSI mesurée à $t_n$:

$$RSSI[t_n]=-Pr[t_n];$$

$$d[t_n]=10 \wedge [(RSSI[t_n]+K)/10*n] ;$$

$$d'[t_{n+1}] = d[t_n] + \Delta d[t_n\ t_{n+1}] ;$$

$$RSSI'[t_{n+1}] = -10*n*\log(d'[t_{n+1}]) + K ;$$

$$\Delta RSSI[t_n\ t_{n+1}] = RSSI'[t_{n+1}] - RSSI[t_n] ;$$

Avec K la constante de l'équation de Friis calculée à une distance de $d_0$=1m, $d'[t_{n+1}]$ la distance E vers P (ou P vers E) à l'instant $t_{n+1}$, RSSI'[$t_{n+1}$] la valeur du RSSI estimée à l'instant $t_{n+1}$ et $\Delta d[t_n\ t_{n+1}]$ la mesure de distance du déplacement de E ou P entre $t_n$ et $t_{n+1}$.

- Méthode 2 : On introduit l'incertitude du paramètre n

En pratique, la valeur du paramètre n évolue en fonction du contexte et de la distance de séparation entre E et P. Un étalonnement terrain propre à l'expérimentation montre que l'on peut évaluer le paramètre n dans un intervalle [2 4]. Selon l'invention, pour chaque borne de cet intervalle une solution est estimée dans le domaine RSSI permettant de déterminer les extremums du déplacement (dans le domaine RSSI).

| $n=n_{min}$ | $n=n_{max}$ |
|---|---|
| RSSI[$t_n$]=-Pr[$t_n$] ; | |
| d[$t_n$]=10 ^ [(RSSI[$t_n$]+K)/10*n] ; <br> d'[$t_{n+1}$] = d[$t_n$] + $\Delta d[t_n\ t_{n+1}]$ ; <br> RSSI'[$t_{n+1}$] = -10*n*log(d'[$t_{n+1}$]) + K ; <br> $\Delta$RSSI[$t_n\ t_{n+1}$] = RSSI'[$t_{n+1}$] - RSSI[$t_n$] ; | |
| ARSSI$_{min}$[$t_n\ t_{n+1}$] | $\Delta$RSSI$_{max}$[$t_n\ t_{n+1}$] |

Exemple :

La valeur initiale du RSSI à une distance connue de 1 mètre est de -45dBm. À un instant $t_0$ (début de mouvement du dispositif E), la valeur du RSSI est de -60dBm. À un deuxième instant $t_1$ la mesure de distance du dispositif E est de 0,7m.

En supposant la borne inférieure du paramètre n (n=2), le déplacement mesuré dans le domaine RSSI est de 1,0190 dBm.

En supposant la borne supérieure du paramètre n (n=4), le déplacement mesuré dans le domaine RSSI est de 4,4933 dBm.

L'intervalle considéré pour le déplacement du dispositif E dans le domaine RSSI sera [1 4,5].

- Méthode 3: On introduit l'incertitude du paramètre n en interprétant les mouvements « possibles » des dispositifs E ou P.

Comme pour la méthode 2, on considère un intervalle d'étude dont la valeur minimum sera cette fois ci en fonction du mouvement des dispositifs E ou P. Dans le contexte de l'étude le minimum du déplacement dans le domaine RSSI est borné par la différence du RSSI reçu à $t_n$ et $t_{n+1}$.

| | $n=n_{max}$ |
|---|---|
| RSSI[$t_n$] = -Pr[$t_n$] ; <br> RSSI[$t_{n+1}$] = -Pr[$t_{n+1}$] ; | RSSI[$t_n$]=-Pr[$t_n$] ; <br> d[$t_n$]=10 ^ [(RSSI[$t_n$]+K)/10*n] ; <br> d'[$t_{n+1}$] = d[$t_n$] + $\Delta d[t_n\ t_{n+1}]$ ; <br> RSSI[$t_{n+1}$] = -10*n*log(d'[$t_{n+1}$]) + K ; |
| $\Delta$RSSI$_{min}$[$t_n\ t_{n+1}$] = RSSI[$t_{n+1}$] - RSSI[$t_n$] ; | $\Delta$RSSI$_{max}$[$t_n\ t_{n+1}$] = RSSI'[$t_{n+1}$] - RSSI[$t_n$] ; |

G) Description des processus de décision pour la gestion des aberrations

On définit comme « aberrante » toute mesure, estimation ou calcul contraires au sens commun propre aux capteurs ou aux processus d'origine dans le contexte d'utilisation. Beaucoup de ces aberrations sont dues à des signaux parasites (appelés « glitch » en anglais) rendus par les capteurs et/ou une influence de l'utilisation dans un contexte non maitrisé. La mise en évidence des aberrations peut être effectuée par la détermination de valeurs critiques, par un suivi temporel (étude des valeurs précédentes) ou encore par une corrélation des résultats avec l'utilisation pratique du processus. Dans le cadre de l'invention, une gestion des aberrations sera effectuée à chaque nouveau résultat du processus.

A titre d'exemple, si un enfant porteur d'un bracelet comportant le dispositif E heurte son poignet contre une table, cela engendrera un signal d'accélération abrupt et sans rapport avec les signaux habituel lors d'un déplacement du corps: ce signal sera interprété par le procédé, qui produira une solution mathématique, mais qui devra être identifiée comme étant aberrante par rapport aux données identifiées comme « normales ».

Dans le cadre de l'utilisation selon la présente invention, les dispositifs E et P peuvent être portés par des humains se déplaçant dans un environnement propre à accueillir des promeneurs. Ainsi en fonction de la distance de séparation perçue par le processus, la direction de E par rapport à P ne peut varier que dans une certaine mesure.

A titre d'exemple, si l'emplacement du dispositif E est déterminé à une distance de 20 mètres avec un angle de 90 degrés (par convention en face de P) alors E ne peut se retrouver à 180 degrés à l'instant suivant (derrière P).

Trois méthodes de traitement des aberrations peuvent notamment être utilisées:

- Méthode 1 : gestion par comparaison entre deux instants $t_n$ et $t_{n-1}$

À chaque instant, l'angle de la coordonnée de E par rapport à P déterminé par le processus est comparé à l'argument de la coordonnée polaire précédente de E. Si cette comparaison est supérieure à un certain seuil alors la mesure à $t_n$ sera dite aberrante. Le seuil doit être défini en corrélation avec la distance de séparant E et P.

Si $|\theta_E[t_n] - \theta_E[t_{n-1}]| < \alpha$ alors la position de E par rapport à P est dite valide (avec $\alpha$ la valeur du seuil et $\theta_E[t_n]$ l'angle de la position de E par rapport à P)

- Méthode 2 : gestion par étude de la moyenne des N dernières estimations (de $t_n$ à $t_{n-N}$)

A chaque instant, l'argument de la coordonnée de E par rapport à P déterminé par le procédé selon l'invention, est comparé à la moyenne des arguments des N coordonnées de E précédentes. Si cette comparaison est supérieure à un certain seuil alors la mesure à $t_n$ sera considérée aberrante. Le seuil doit être défini en corrélation avec la distance séparant E et P.

Si $|\theta_E[t_n] - (1/N)*\sum_{i=1}^{i=N} \theta_E[t_{n-1}]| < \alpha$, alors la position de E par rapport à P est dite valide (avec $\alpha$ le seuil, N>0, $\theta_E[t_n]$ l'angle de la position de E par rapport à P et $\sum_{i=1}^{i=N}$ la formulation de la somme de 1 à N ).

- Méthode 3 : Gestion par étude probabiliste

Pour chaque instant, une « estimation a *priori* » de la mesure polaire à t peut être déterminée par une loi Gaussienne en fonction des instants passés et des mesures issues de la centrale inertielle. Ainsi, pour la mesure polaire calculée à t, une probabilité est associée. Si celle-ci est suffisante, la mesure est alors validée.

H) Détermination de la distance entre E et P

Dans cette section l'inventeur présente une méthode permettant d'estimer la distance entre les dispositifs E et P.

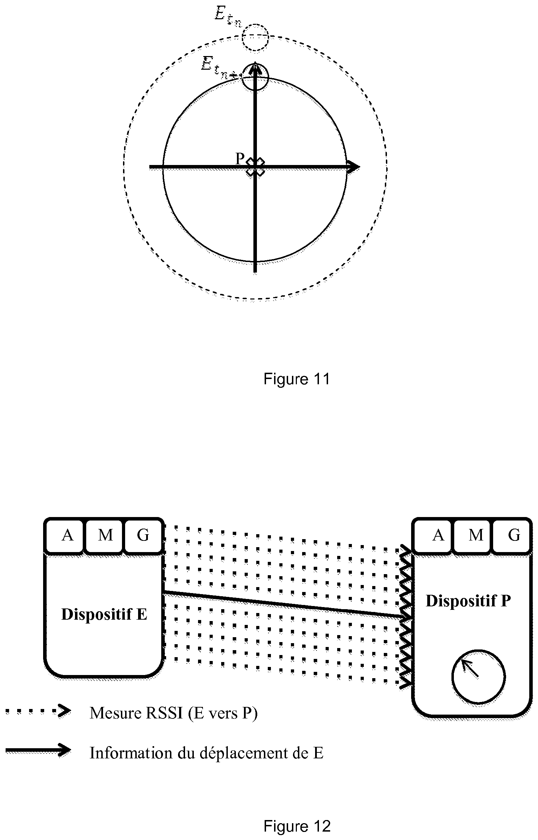

Dans le contexte de la mise en oeuvre de la solution, le dispositif P se dirige vers le dispositif E le plus généralement en ligne droite (afin de retrouver au plus vite E); cela est illustré sur la figure 11.

Dans cette situation, il y a théoriquement une égalité entre le $\Delta RSSI[t_n\ t_{n+1}]$ (interprétation du déplacement de P ou E dans le domaine RSSI entre les instants $t_n$ et $t_{n+1}$) et la différence des mesures RSSI aux instants $t_n$ et $t_{n+1}$

On remarquera que le calcul suivant est aussi valide lorsque l'on constate que $\Delta RSSI' = \Delta RSSI = RSSI[t_{n+1}] - RSSI[t_n]$, avec $\Delta RSSI'$ de déplacement de P ou E dans le domaine RSSI.

Supposons que l'on connaisse K, valeur initiale de la mesure RSSI à une distance de 1 mètre ($d_0$=1).

$$\Delta RSSI = RSSI[t_{n+1}] - RSSI[t_n] \ ;$$

$$\Delta RSSI = -10*n*[\log(d[t_n] + \Delta d[t_n\ t_{n+1}]) - \log(d[t_n])] \ ;$$

$$\Delta RSSI/(-10*n) = \log((d[t_n] + \Delta d[t_n\ t_{n+1}])/d[t_n]) \ ;$$

$$10 \wedge [\ \Delta RSSI/(-10*n)] = (d[t_n] + \Delta d[t_n\ t_{n+1}])/d[t_n] \ ;$$

$$d[t_n] * 10 \wedge [\ \Delta RSSI/(-10*n)] = d[t_n] + \Delta d[t_n\ t_{n+1}] \ ;$$

EP 3 227 705 B1

$$d[t_n] = \Delta d[t_n\ t_{n+1}]/ (10 \wedge [\ \Delta RSSI/(-10*n)] - 1)\ ;$$

Cette dernière équation est solution de la distance entre P et E (ou E et P) à l'instant $t_n$. Cette équation peut aussi être utilisée pour l'adaptions du paramètre n (« path loss exponent »).

I) Utilisation du dispositif selon l'invention

Nous donnons ici une liste non exhaustive des utilisations possibles du dispositif et procédé selon l'invention. Chacune de ces utilisations fait appel à un superviseur (porteur du dispositif P) et un ou plusieurs dispositifs E dont il s'agit de déterminer la position par rapport au dispositif P.

- Parents, grands-parents, puéricultrices :
  ◦ Besoin principal : savoir où se trouve le ou les enfants (porteurs d'un dispositif E).
- Centres socio-culturels, écoles :
  ◦ Besoin principal : savoir où se trouvent des groupes d'enfants (porteurs d'un dispositif E).
- Parcs de loisirs privés :
  ◦ Besoin principal : gérer l'encadrement des groupes d'enfants (porteurs d'un dispositif E) / retour d'information sur le déplacement des clients.
- Maison de repos, centres de soins psychologiques /psychiatriques :
  ◦ Besoin principal : savoir où se trouvent les pensionnaires (porteurs d'un dispositif E).
- Alpinistes, randonnées en montage :
  ◦ Besoin principal : retrouver une personne (porteur d'un dispositif E) en danger le plus rapidement possible (en particulier sous une avalanche ou dans une crevasse).
- Personnes possédant des animaux :
  ◦ Besoin principal : retrouver son animal domestique (porteur d'un dispositif E).
- Musée, opérateurs de tourisme :
  ◦ Besoin principal : gérer les flux de touristes (porteurs d'un dispositif E) durant les visites.
- Personnes inscrites sur des sites de rencontre :
  ◦ Besoin principal : faciliter les contacts/rencontres entre personnes porteuses d'un dispositif possédant l'application spécifique permettant d'exécuter le procédé selon l'invention).
- Pompiers et autres personnels de secours :
  ◦ Besoin principal : localiser/trouver un objet distant (porteur d'un dispositif E) ou une personne (porteur d'un dispositif E) sans accès à un réseau externe (en particulier dans un bâtiment ou un sous-sol).
- Evènementiel sportif :
  ◦ Besoin principal : assurer le suivi des sportifs (porteurs d'un dispositif E) lors de l'épreuve.

Le dispositif selon l'invention peut aussi être utilisé comme antivol et/ou pour détecter la perte d'un objet porteur du dispositif E et de le retrouver.

J) Exemples pour la répartition des étapes de calcul sur les dispositifs E et P

Nous approfondissons ici la description des différents modes de réalisation montrés schématiquement sur les figures 1a, 1b et 1c.

Dans un premier mode de réalisation décrit schématiquement sur la figure 1a :
Les dispositifs E et P déterminent chacun :

(a) à partir des signaux filtrés issus, respectivement, de son accéléromètre, de son magnétomètre et de son gyromètre, l'orientation du dispositif E (étape 100) et P (étape 200), respectivement, par rapport au nord ;

(b) à partir des signaux filtrés issus de son accéléromètre, l'accélération linéaire du dispositif E (étape 110) et P (étape 210), respectivement ;

(c) à partir de cette accélération linéaire, par intégration (étapes 120 et 220, respectivement) et en prenant en compte le temps (étapes 130 et 230, respectivement), son déplacement.

Le dispositif P transmet au dispositif E, de préférence par une liaison de type Bluetooth (BLE), l'orientation du dispositif P par rapport au nord et son déplacement. Ces données sont utilisées par une étape de correction des orientations par rapport à l'interprétation du nord de P et E (étape 140). Une mesure du RSSI est déterminée (étape 150).

La mesure RSSI, éventuellement après filtrage, est utilisée pour la projection des positions possibles du dispositif distant à l'instant t (étape 160); si à cette étape un déplacement de E ou/et P est constaté (étape 170), en prenant en compte lesdits déplacements respectifs des dispositifs E et P (déterminées, respectivement, aux étapes 130 et 230), ces déplacements sont pris en compte pour les projections (étape 172) en utilisant l'orientation corrigée du dispositif E obtenue à l'étape 140. Puis on mesure le RSSI à un temps t+1 correspondant aux nouvelles positions du dispositif distant (étape 174), on minimise l'erreur entre la valeur estimée de RSSI à t+1 et la valeur mesurée (reçu) du RSSI à t+1 (étape 176); on estime la position du dispositif E (étape 180) exprimée par un couple « RSSI et direction », on gère les aberrations (étape 181), on détermine la distance (étape 183) de sorte à exprimer un couple « distance et direction » et on enregistre ce couple (étape 182).

Le résultat obtenu à l'étape 183 est transmis au dispositif P, de préférence par une liaison de type Bluetooth (BLE), pour affichage sur le dispositif d'affichage (étape 300). Les figures 1b et 1c montrent de manière schématique d'autres modes de réalisation des mêmes étapes de procédé, mais dont certaines sont réparties différemment sur les deux dispositifs E et P. Cela implique une programmation différente des microprocesseurs contenus dans les dispositifs E et P, et la quantité et la nature des données qui transitent entre les deux dispositifs (de préférence par une liaison de type Bluetooth (BLE)), sera différente.

Plus précisément, dans le mode de réalisation selon la figure 1b, les étapes 181, 182 et 183 sont effectuées dans le dispositif P et non pas dans le dispositif E.

Dans le mode de réalisation selon la figure 1c, il n'y a que les étapes 100, 110 et 120 qui sont exécutées dans le dispositif E, et par conséquent ce sont les données décrivant l'orientation du dispositif E par rapport au nord issue de l'étape 100) et de son déplacement (issues de l'étape 130) qui sont transmises (de préférence par une liaison de type Bluetooth (BLE)) au dispositif P.

D'une manière générale, les filtres utilisés (par exemple sur les figures 1a, 1b et 1c ceux qui sont indiqués avant les étapes 100 et 200, et ceux correspondant au repères 152 et utilisés aux étapes 180 et 182) peuvent être de différents types de filtres connus en traitement de signal, par exemple un filtre moyen ou un filtre bayésien (de préférence de second ordre).

D'autres modes de réalisation basés sur une autre répartition des étapes sur les deux dispositifs peuvent être imaginés dans le cadre de la présente invention.

D'autres modes de communication entre le dispositif P et le ou les dispositifs E peuvent être imaginés dans le cadre de la présente invention.

### 3. Exemple

Dans cet exemple de réalisation, on utilise un moyen de communication par onde radiofréquence d'une fréquence de 2,45 GHz communément appelée Bluetooth.

Le dispositif E utilisé dans cet exemple est doté d'un module de communication Bluetooth 4.0 (BLE CC2541) à 0 dBm permettant une couverture de 80 à 100 mètres (en champ libre). Ce module est embarqué sur une carte électronique composée d'un accéléromètre tri-axes (KXTJ9 de Hïonix, range $\pm$ 4g), d'un magnétomètre tri-axes (MAG3110 Freescale) d'un gyromètre tri-axes (interne au composant IMU-300 de InvenSens) d'un micro-processeur (8051) ainsi que d'une batterie. Il permet un fonctionnement en intérieur comme en extérieur. Ce module (qui représente le dispositif E) est en lien direct avec un Smartphone compatible BLE et disposant d'une centrale inertielle composée au minimum d'un accéléromètre et d'un magnétomètre. Ce Smartphone représente le dispositif P. L'application dédiée à la solution est installée sur le Smartphone. Les deux dispositifs sont indépendants de tout réseaux externes, ce qui permet un fonctionnement de la solution dans toutes zones (dans l'application choisie) en intérieur ou extérieur et sans contrainte pécuniaire ou géographique.

Une présentation schématique des échanges entre E et P dans le cadre de la mise en oeuvre de l'exemple présent est donnée sur la figure 12, dans laquelle la flèche pleine représente le flux d'information concernant le déplacement du dispositif E, et la flèche pointillée représente la mesure RSSI, effectuée par P à partir du signal reçu de E.

L'exemple propose une mise en oeuvre où l'ensemble du processus est traité (estimation de la position de E relative à P), validé (estimation de la véracité de la position E et gestion des aberrations) puis affiché par P.

Les dispositifs E et P calculent leur propre déplacement grâce aux mesures issues de A, M et G sur chacun des dispositifs. Pour chacune, une fréquence de 10Hz suffit à une estimation correcte des mouvements des deux dispositifs.

E transmet à une fréquence de 10Hz un signal permettant de mesurer le RSSI entre les dispositifs E et P. Ces mesures sont nécessaires au traitement permettant d'estimer une mesure RSSI fiable au moment opportun.

E transmet à une fréquence de 50Hz les informations relatives à son déplacement. Une redondance des informations est très utile afin de palier différents problèmes de communication dus à l'environnement (perte d'informations).

Le dispositif E a été réalisé sous une forme intégrable dans un support type bracelet ou dans un boitier dont les spécificités lui permettent d'être fixé sur un vêtement du porteur.

**Revendications**

1. Procédé de localisation dans un plan cartésien d'au moins un dispositif E par rapport à un dispositif P, sachant qu'au moins un des dispositifs E ou P est doté d'une centrale inertielle, et sachant que chacun des dispositifs E et P est doté d'un module de communication de type émetteur - récepteur, ledit procédé comprenant les étapes suivantes

   (i) on initialise les dispositifs E et P par leur synchronisation en angle par rapport au nord magnétique terrestre ;
   (ii) en un instant $t_n$, le dispositif E reçoit du dispositif P, ou le dispositif P reçoit du dispositif E, une mesure RSSI, et on détermine l'ensemble des positions possibles du dispositif E par rapport à P dans l'espace métrique de la mesure RSSI;
   (iii) à l'instant $t_{n+1}$ le dispositif P reçoit du dispositif E, ou le dispositif E reçoit du dispositif P, au moins une information sur le déplacement du dispositif E et/ou du dispositif P, à savoir au moins la direction ainsi que la distance parcourue pour l'intervalle $[t_n\ t_{n+1}]$ ;
   (iv) on transforme ledit déplacement dans l'espace métrique de la mesure RSSI (appelé « domaine RSSI ») et détermine un ensemble de positions dans le l'espace métrique de la mesure RSSI du dispositif E par rapport au dispositif P par projection du déplacement du dispositif E ou du dispositif P sur les positions estimées à l'étape (ii) ; ;
   (v) on reçoit une nouvelle mesure RSSI à l'instant $t_{n+1}$ et on détermine un ensemble de positions de E par rapport à P à l'instant $t_{n+1}$ ;
   (vi) on détermine la relation entre les positions estimées à l'étape (iv) et la ou les positions déterminées du dispositif E à l'instant $t_{n+1}$ issues de l'étape (v) ;
   (vii) on utilise la relation déterminée à l'étape (v) pour déterminer si la ou les nouvelles positions calculées à l'étape (vi) sont plausibles, possibles ou vraisemblables par rapport aux positions déterminées aux instants précédents, puis on détermine la position du dispositif E par rapport au dispositif P,

   sachant que

   - l'étape (i) est nécessaire dans le cas où le dispositif E est muni d'une centrale inertielle et se déplace pendant l'exécution du procédé, et est facultative si le dispositif E ne se déplace pas pendant l'exécution du procédé, et
   - le dispositif P doit être muni d'une centrale inertielle pour que son éventuel déplacement puisse être pris en compte pendant l'exécution du procédé.

2. Procédé selon la revendication 1, dans lequel on affiche sur un écran d'affichage du dispositif P la position du dispositif E par rapport au dispositif P, de préférence par un affichage de la direction et de la distance.

3. Procédé selon la revendication 1 ou 2, dans lequel à l'étape (vii), on compare les coordonnées polaires de E par rapport à P entre $t_{n+1}$ et $t_n$ et/ou $t_{n-m}$ (avec m≥1) et on détermine quelle est position la plus probable à $t_{n+1}$, de préférence en corrélant des différences angulaires avec le calcul de la distance entre E et P à l'instant $t_{n+1}$.

4. Procédé selon l'une quelconque des revendications 1 à 3, dans lequel l'initialisation à l'instant $t_n$ est effectuée par un utilisateur du dispositif P, à la première mise en oeuvre du cycle de mesure, ou est déclenchée de manière automatique par un événement déclencheur, ledit événement déclencheur étant avantageusement la détection d'un mouvement du dispositif P ou du dispositif E par leurs centrales inertielles respectives.

5. Procédé selon l'une quelconque des revendications 1 à 4, dans lequel la mesure RSSI aux étapes (ii) et (v) est effectuée par le dispositif E ou par le dispositif P.

6. Procédé selon l'une quelconque des revendications 1 à 5, dans lequel le dispositif P est un dispositif portable de type SmartPhone.

7. Procédé selon l'une quelconque des revendications 1 à 6, dans lequel ledit module de communication est un module de type Bluetooth.

8. Procédé selon l'un des revendications 1 à 7, **caractérisé en ce qu'**il est exécuté avec une pluralité de dispositifs E, dont chacun émet son propre identifiant et/ou sur une fréquence différente et/ou avec un module de communication différent et/ou avec un standard de communication différent.

9. Dispositif comprenant un accéléromètre et soit un magnétomètre soit un gyromètre, ainsi qu'un émetteur - récepteur et un microprocesseur, ledit microprocesseur étant configuré pour exécuter le procédé de localisation du dispositif E selon l'une des revendications 1 à 8, le dispositif étant l'un des dispositifs E ou P, où, si le dispositif est le dispositif E, le dispositif E reçoit, aux étapes (ii) et (iii), du dispositif P la mesure RSSi et l'au moins une information sur le déplacement du dispositif P, et si le dispositif est le dispositif P, le dispositif P reçoit, aux étapes (ii) et (iii), du dispositif E la mesure RSSi et l'au moins une information sur le déplacement du dispositif E.

10. Dispositif comprenant une centrale inertielle, un émetteur - récepteur et un microprocesseur, ledit microprocesseur étant configuré pour exécuter le procédé de localisation du dispositif E selon l'une des revendications 1 à 8, le dispositif étant l'un des dispositifs E ou P, où, si le dispositif est le dispositif E, le dispositif E reçoit, aux étapes (ii) et (iii), du dispositif P la mesure RSSi et l'au moins une information sur le déplacement du dispositif P, et si le dispositif est le dispositif P, le dispositif P reçoit, aux étapes (ii) et (iii), du dispositif E la mesure RSSi et l'au moins une information sur le déplacement du dispositif E.

11. Utilisation du procédé selon l'une quelconque des revendications 1 à 8 ou du dispositif selon la revendication 9 ou 10 pour localiser un porteur du dispositif E par rapport au dispositif P, ledit porteur étant sélectionné dans le groupe formé par : un être vivant mobile ou immobile ou encore un objet mobile ou immobile, et plus particulièrement : un enfant ; un adulte ; une personne sous surveillance dans un établissement de soins, d'éducation spécialisé ou de retraite ; un animal domestique ; un intervenant d'un service de secours ; une victime d'avalanche ou de chute dans une crevasse.

**Patentansprüche**

1. Verfahren zum Orten, in einer kartesischen Ebene, von mindestens einer Vorrichtung E im Verhältnis zu einer Vorrichtung P, wobei mindestens eine der Vorrichtungen E oder P mit einem Inertialsystem versehen ist, und wobei jede der Vorrichtungen E und P mit einem Kommunikationsmodul vom Typ Sender-Empfänger versehen ist, wobei das Verfahren die folgenden Schritte umfasst:

   (i) Initialisieren der Vorrichtungen E und P durch deren Winkelsynchronisierung im Verhältnis zum magnetischen Norden der Erde;
   (ii) Empfangen, zu einem Moment $t_n$, einer RSSI-Messung durch die Vorrichtung E von der Vorrichtung P oder durch die Vorrichtung P von der Vorrichtung E, und Bestimmen der Gesamtheit der möglichen Positionen der Vorrichtung E im Verhältnis zu P im metrischen Raum der RSSI-Messung;
   (iii) Empfangen, zum Moment $t_{n+1}$, mindestens einer Information über die Verlagerung der Vorrichtung E und/oder der Vorrichtung P, nämlich mindestens der Richtung sowie der zurückgelegten Distanz für das Intervall $[t_n \ t_{n+1}]$, durch die Vorrichtung P von der Vorrichtung E oder durch die Vorrichtung E von der Vorrichtung P;
   (iv) Verarbeiten der Verlagerung im metrischen Raum der RSSI-Messung (bezeichnet als "RSSI-Bereich") und Bestimmen einer Gruppe von Positionen im metrischen Raum der RSSI-Messung der Vorrichtung E im Verhältnis zur Vorrichtung P durch Projizieren der Verlagerung der Vorrichtung E oder der Vorrichtung P auf die in Schritt (ii) geschätzten Positionen;
   (v) Empfangen einer neuen RSSI-Messung zum Moment $t_{n+1}$ und Bestimmen einer Gruppe von Positionen von E im Verhältnis zu P zum Moment $t_{n+1}$;
   (vi) Bestimmen der Beziehung zwischen den in Schritt (iv) geschätzten Positionen und der oder den bestimmten Positionen der Vorrichtung E zum Moment $t_{n+1}$ aus Schritt (v);
   (vii) Verwenden der in Schritt (vi) bestimmten Beziehung, um zu bestimmen, ob die in Schritt (vi) berechnete(n) neue(n) Position(en) im Verhältnis zu den Positionen plausibel, möglich oder wahrscheinlich ist/sind, die zu den vorangegangenen Momenten bestimmt wurden, dann Bestimmen der Position der Vorrichtung E im Verhältnis zur Vorrichtung P,

   wobei

   - der Schritt (i) notwendig ist, wenn die Vorrichtung E mit einem Inertialsystem ausgestattet ist und sich während der Ausführung des Verfahrens verlagert, und fakultativ ist, wenn sich die Vorrichtung E während der Ausführung des Verfahrens nicht verlagert, und

- die Vorrichtung P mit einem Inertialsystem ausgestattet sein muss, damit ihre eventuelle Verlagerung während der Ausführung des Verfahrens berücksichtigt werden kann.

2. Verfahren nach Anspruch 1, wobei auf einem Anzeigebildschirm der Vorrichtung P die Position der Vorrichtung E im Verhältnis zur Vorrichtung P, vorzugsweise durch eine Anzeige der Richtung und der Distanz, angezeigt wird.

3. Verfahren nach Anspruch 1 oder 2, wobei die polaren Koordinaten von E im Verhältnis zu P zwischen $t_{n+1}$ und $t_n$ und/oder $t_{n-m}$ (mit $m \geq 1$) in Schritt (vii) verglichen werden und vorzugsweise durch Korrelieren von Winkeldifferenzen mit der Berechnung der Distanz zwischen E und P zum Moment $t_{n+1}$ bestimmt wird, welche Position zu $t_{n+1}$ am wahrscheinlichsten ist.

4. Verfahren nach einem der Ansprüche 1 bis 3, wobei die Initialisierung der Vorrichtung P bei der ersten Durchführung des Messzyklus zum Moment $t_n$ von einem Benutzer durchgeführt oder von einem auslösenden Ereignis automatisch ausgelöst wird, wobei das auslösende Ereignis in vorteilhafter Weise die Ermittlung einer Bewegung der Vorrichtung P oder der Vorrichtung E durch ihre jeweiligen Inertialsysteme ist.

5. Verfahren nach einem der Ansprüche 1 bis 4, wobei die RSSI-Messung in den Schritten (ii) und (v) von der Vorrichtung E oder von der Vorrichtung P durchgeführt wird.

6. Verfahren nach einem der Ansprüche 1 bis 5, wobei die Vorrichtung P eine tragbare Vorrichtung vom Typ SmartPhone ist.

7. Verfahren nach einem der Ansprüche 1 bis 6, wobei das Kommunikationsmodul ein Modul vom Typ Bluetooth ist.

8. Verfahren nach einem der Ansprüche 1 bis 7, **dadurch gekennzeichnet, dass** es mit einer Vielzahl von Vorrichtungen E ausgeführt wird, von denen jede ihre eigene Kennung und/oder auf einer unterschiedlichen Frequenz und/oder mit einem unterschiedlichen Kommunikationsmodul und/oder mit einem unterschiedlichen Kommunikationsstandard sendet.

9. Vorrichtung, umfassend einen Beschleunigungsmesser und entweder ein Magnetometer oder ein Gyrometer sowie einen Sender-Empfänger und einen Mikroprozessor, wobei der Mikroprozessor ausgelegt ist, um das Verfahren zum Orten der Vorrichtung E nach einem der Ansprüche 1 bis 8 auszuführen, wobei die Vorrichtung eine von den Vorrichtungen E oder P ist, wobei, wenn die Vorrichtung die Vorrichtung E ist, die Vorrichtung E in den Schritten (ii) und (iii) von der Vorrichtung P die RSSI-Messung und mindestens eine Information über die Verlagerung der Vorrichtung P empfängt und wenn die Vorrichtung die Vorrichtung P ist, die Vorrichtung P in den Schritten (ii) und (iii) von der Vorrichtung E die RSSI-Messung und mindestens eine Information über die Verlagerung der Vorrichtung E empfängt.

10. Vorrichtung, umfassend ein Inertialsystem, einen Sender-Empfänger und einen Mikroprozessor, wobei der Mikroprozessor ausgelegt ist, um das Verfahren zum Orten der Vorrichtung E nach einem der Ansprüche 1 bis 8 auszuführen, wobei die Vorrichtung eine von den Vorrichtungen E oder P ist, wobei, wenn die Vorrichtung die Vorrichtung E ist, die Vorrichtung E in den Schritten (ii) und (iii) von der Vorrichtung P die RSSI-Messung und mindestens eine Information über die Verlagerung der Vorrichtung P empfängt und wenn die Vorrichtung die Vorrichtung P ist, die Vorrichtung P in den Schritten (ii) und (iii) von der Vorrichtung E die RSSI-Messung und mindestens eine Information über die Verlagerung der Vorrichtung E empfängt.

11. Verwendung des Verfahren nach einem der Ansprüche 1 bis 8 oder der Vorrichtung nach Anspruch 9 oder 10 zum Orten eines Trägers der Vorrichtung E im Verhältnis zur Vorrichtung P, wobei der Träger aus der Gruppe ausgewählt ist, die gebildet ist von: einem beweglichen oder unbeweglichen Lebewesen oder auch von einem beweglichen oder unbeweglichen Objekt und insbesondere: einem Kind; einem Erwachsenen; einer Person unter Aufsicht in einer Pflege-, Sondererziehungs- oder Senioreneinrichtung; einem Haustier; einem Akteur eines Rettungsdienstes; einem Opfer einer Lawine oder eines Sturzes in eine Spalte.

**Claims**

1. Method for tracking in a Cartesian plane at least one device E with respect to a device P, given that at least one of the devices E or P is equipped with an inertial platform, and given that each of the devices E and P is equipped with a transmitter-receiver type communication module, said method comprising the following steps:

(i) the devices E and P are initialized by the angular synchronization thereof with respect to the terrestrial magnetic north;

(ii) at a time $t_n$, the device E receives from the device P, or the device P receives from the device E an RSSI measurement, and the set of possible positions of the device C with respect to P in the metric space of the RSSI measurement is determined;

(iii) at the time $t_{n+1}$ the device P receives from the device E, or the device E receives from the device P, at least one item of information regarding the displacement of the device E and/or of the device P, namely at least the direction as well as the distance travelled for the interval $[t_n\ t_{n+1}]$;

(iv) said distance is converted into the metric space of the RSSI measurement (referred to as "RSSI domain") and a set of positions is determined in the metric space of the RSSI measurement of the device E with respect to the device P by projection of the displacement of the device E or the device P onto the positions estimated in step (ii);

(v) a new RSSI measurement is received at the time $t_{n+1}$ and a set of positions of E with respect to P at the time $t_{n+1}$ is determined;

(vi) the relation is determined between the positions estimated in step (iv) and the

(vii) position(s) determined of the device E at the time $t_{n+1}$ which arise from step (v);

(viii) the relation determined in step (v) is used to determine whether the new position(s) calculated in step (vi) are plausible, possible or likely with respect to the positions determined at the previous times, and then the position of the device E is determined with respect to the device P,

given that

- step (i) is required in the case where the device E is equipped with an inertial platform and moves during the execution of the method, and optional if the device E does not move during the execution of the method, and
- the device P must be equipped with an inertial platform so that any displacement thereof can be taken into account during the execution of the method.

2. Method according to claim 1, wherein, on a display screen of the device P, the position of the device E with respect to the device P is displayed, preferably by displaying the direction and distance.

3. Method according to claim 1 or 2, wherein, in step (vii), the polar coordinates of E with respect to P between $t_{n+1}$ and tn and/or $t_{n-m}$ (where m≥1) are compared and the most probable position at $t_{n+1}$ is determined, preferably by correlating these angular differences with the distance calculated between E and P at the time $t_{n+1}$.

4. Method according to any one of claims 1 to 3, wherein the initialization at the time $t_n$ is performed by a user of the device P, on the first implementation of the measurement cycle, or is triggered automatically by a triggering event, said triggering event being advantageously the detection of a movement of the device P or of the device E by the respective inertial platforms thereof.

5. Method according to any one of claims 1 to 4, wherein the RSSI measurement in steps (ii) and (v) is performed by the device E or by the device P.

6. Method according to any one of claims 1 to 5, wherein the device P is a Smartphone type portable device.

7. Method according to any one of claims 1 to 6, wherein said communication module is a Bluetooth type module.

8. Method according to one of claims 1 to 7, **characterized in that** it is carried out with a plurality of devices E, of which each transmits the specific identifier thereof and/or on a different frequency and/or with a different communication module and/or with a different communication standard

9. Device comprising an accelerometer and either a magnetometer or a gyrometer, as well as a transmitter-receiver and a microprocessor, said microprocessor being configured to carry out the method for tracking the device E according to one of claims 1 to 8, the device being one the devices E or P, wherein, if the device is the device E, the device E receives, in steps (ii) and (iii), from the device P the RSSI measurement and the at least one item of information regarding the displacement of the device P, and if the device is the device P, the device P receives, in steps (ii) and (iii), from the device E the RSSI measurement and the at least one item of information regarding the displacement of the device E.

10. Device comprising an inertial platform, a transmitter-receiver and a microprocessor, said microprocessor being configured to carry out the method for tracking the device E according to one of claims 1 to 8, the device being one the devices E or P, wherein, if the device is the device E, the device E receives, in steps (ii) and (iii), from the device P the RSSI measurement and the at least one item of information regarding the displacement of the device P, and if the device is the device P, the device P receives, in steps (ii) and (iii), from the device E the RSSI measurement and the at least one item of information regarding the displacement of the device E.

11. Use of the method according to any one of claims 1 to 8 or of the device according to claim 9 or 10 for tracking a bearer of the device E with respect to the device P, said bearer being selected from the group formed by: a mobile or immobile living being or a mobile or immobile object, and more particularly: a child; an adult; a person under monitoring in a healthcare, specialized education or retirement facility; a pet; an emergency service responder; a victim of an avalanche or fall into a crevasse.

Figure 1a

Figure 1b

Figure 1c

Figure 2a

$$Acc = 0.3 \, {}^{m^2}/_s$$
$$Gyro = 0.5 \, {}^{rad}/_s$$
$$Magn = 0.7 rad$$

Figure 2b

Figure 3

Figure 4a

Figure 4b

Figure 4c

Figure 4d

Figure 4e

Figure 4f

Figure 4g

Figure 4h

Figure 4i

Figure 4j

Figure 4k

Figure 5

Figure 6

Figure 7

Figure 8

**Erreur ΔRSSI [dBm]**

Figure 9

Figure 10

Figure 11

········▷  Mesure RSSI (E vers P)

———————▶  Information du déplacement de E

Figure 12

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2006072697 A
- GB 2349301 A
- US 6246376 B
- US 6788199 B
- US 6529131 B
- US 20040021569 A
- GB 2391991 A
- US 6778902 B
- US 7110777 B
- US 7667646 B
- US 2008085678 A

- EP 1699183 A
- DE 102005057578
- WO 2010026566 A
- EP 2509343 A
- DE 202013000840
- US 5289163 A, Perez
- US 6344797 B
- US 5900817 A
- US 6078260 A
- US 20030034894 A

**Littérature non-brevet citée dans la description**

- **GUO XIAOLIN et al.** *An inter-device positioning method based on inertial sensors and wireless signal strength*